(19) Europäisches Patentamt
European Patent Office
Office européen des brevets

(11) **EP 4 770 238 A1**

(12) **EUROPEAN PATENT APPLICATION**
published in accordance with Art. 153(4) EPC

(43) Date of publication:
**01.07.2026 Bulletin 2026/27**

(21) Application number: **23950007.7**

(22) Date of filing: **25.08.2023**

(51) International Patent Classification (IPC):
**H04W 72/1268** $^{(2023.01)}$

(52) Cooperative Patent Classification (CPC):
**H04W 72/1268**

(86) International application number:
**PCT/CN2023/115082**

(87) International publication number:
**WO 2025/043412 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
- **CAO, Jianfei**
  **Dongguan, Guangdong 523860 (CN)**
- **LIU, Zhe**
  **Dongguan, Guangdong 523860 (CN)**
- **CHEN, Wenhong**
  **Dongguan, Guangdong 523860 (CN)**

(74) Representative: **Taor, Simon Edward William et al**
**Venner Shipley LLP**
**TIDE Bankside**
**8 Emerson Street**
**London SE1 9DU (GB)**

(54) **COMMUNICATION METHOD AND APPARATUS, AND DEVICE, CHIP, STORAGE MEDIUM, PRODUCT AND PROGRAM**

(57)    Disclosed in the present application are a communication method and apparatus, and a device, a chip, a storage medium, a product and a program. The method comprises: a terminal device using one or more spatial filters to send an uplink channel and/or uplink signal to a first network device, wherein the first network device is a network device that does not support downlink transmission, and the uplink channel and/or uplink signal, which are/is sent by the one or more spatial filters, is used by the first network device to determine a first TA value of the first network device; and the terminal device receiving first information sent by a second network device, wherein the first information is used for indicating the first TA value, and the first TA value is used by the terminal device to perform uplink transmission with the first network device.

**FIG. 5**

## Description

TECHNICAL FIELD

Embodiments of the present application relate to the technical field of communication, and in particular to a communication method and apparatus, a device, a chip, a storage medium, a product, and a program.

BACKGROUND

A special type of network device has been introduced into the communication system, which can only have the receiving capability for uplink (UL) transmission, and does not require the transmitting capability for downlink transmission, thereby reducing the manufacturing cost of the network device. In this way, more network devices of this type can be deployed in the communication system, to reduce the distance between a terminal device and the network device, thereby enhancing the uplink coverage capability without increasing the complexity of the terminal device.

However, for the network device that only supports uplink transmission, since the network device has no downlink transmission, how to determine the Timing Advance (TA) value of this type of network device is a technical problem to be solved urgently.

SUMMARY

Embodiments of the present disclosure provide a communication method and apparatus, a device, a chip, a storage medium, a product, and a program.

In a first aspect, an embodiment of the present disclosure provides a communication method. The method includes the following operations.

A terminal device transmits at least one uplink channel and/or uplink signal to a first network device using one or more spatial filters. The first network device is a network device that does not support downlink transmission, and the at least one uplink channel and/or uplink signal transmitted using the one or more spatial filters is used by the first network device to determine a first TA value of the first network device.

The terminal device receives first information transmitted by a second network device. The first information indicates the first TA value, and the first TA value is used for the terminal device to perform uplink transmission with the first network device.

In a second aspect, an embodiment of the present disclosure provides a communication method. The method includes the following operations.

A first network device receives at least one uplink channel and/or uplink signal transmitted by a terminal device using one or more spatial filters. The first network device is a network device that does not support downlink transmission, and the at least one uplink channel and/or uplink signal received using the one or more spatial filters are used to determine a first TA value of the first network device.

The first network device transmits first information to the terminal device through a second network device. The first information indicates the first TA value, the second network device is a network device supporting downlink transmission, and the first TA value is used for the terminal device to perform uplink transmission with the first network device.

In a third aspect, an embodiment of the present disclosure provides a communication method. The method includes the following operations.

A second network device receives third information transmitted by a first network device. The third information is used to indicate a first TA value of the first network device. The first network device is a network device that does not support downlink transmission, and the second network device is a network device that supports downlink transmission.

The second network device transmits first information to a terminal device. The first information indicates the first TA value, and the first TA value is used for the terminal device to perform uplink transmission with the first network device.

In a fourth aspect, an embodiment of the present disclosure provides a communication apparatus. The communication apparatus includes a first transmitting unit and a first receiving unit.

The first transmitting unit is configured to transmit at least one uplink channel and/or uplink signal to a first network device using one or more spatial filters. The first network device is a network device that does not support downlink transmission, and the at least one uplink channel and/or uplink signal transmitted using the one or more spatial filters is used by the first network device to determine a first TA value of the first network device.

The first receiving unit configured to receive first information transmitted by a second network device. The first information indicates the first TA value, and the first TA value is used for the terminal device to perform uplink transmission with the first network device.

In a fifth aspect, an embodiment of the present disclosure provides a communication apparatus. The communication apparatus includes a second receiving unit and a second transmitting unit.

The second receiving unit is configured to receive at least one uplink channel and/or uplink signal transmitted by a terminal device using one or more spatial filters. The first network device is a network device that does not support downlink transmission, and the at least one uplink channel and/or uplink signal received using the one or more spatial filters is used to determine a first TA value of the first network device.

The second transmitting unit is configured to transmit the first TA value to the terminal device through a second network device. The second network device is a network device supporting downlink transmission, and the first TA value is used for the terminal device to perform uplink transmission with the first network device.

In a sixth aspect, an embodiment of the present disclosure provides a communication apparatus. The communication apparatus includes a third receiving unit and a third transmitting unit.

The third receiving unit is configured to receive third information transmitted by a first network device. The third information indicates a first TA value of the first network device. The first network device is a network device that does not support downlink transmission, and the second network device is a network device that supports downlink transmission.

The third transmission unit is configured to transmit first information to a terminal device. The first information indicates the first TA value, and the first TA value is used for the terminal device to perform uplink transmission with the first network device.

In a seventh aspect, an embodiment of the present disclosure provides a communication device including a processor and a memory. The memory is configured to store a computer program, and the processor is configured to call and run the computer program stored in the memory to perform the communication method of any one of the first to third aspects described above.

In an eighth aspect, an embodiment of the present disclosure provides a chip for implementing the communication method of any one of the first to third aspects described above.

Specifically, the chip includes a processor. The processor is configured to call and run a computer program from a memory, to cause a device installed with the chip to perform the communication method of any one of the first to third aspects described above.

In a ninth aspect, an embodiment of the present disclosure provides a computer-readable storage medium. The computer-readable storage medium stores a computer program that, when executed by at least one processor, implements the communication method of any one of the first to third aspects described above.

In a tenth aspect, an embodiment of the present disclosure provides a computer program product including computer program instructions. The computer program instructions cause a computer to perform the communication method of any one of the first to third aspects described above.

In an eleventh aspect, an embodiment of the present disclosure provides a computer program. The computer program, when executed on a computer, causes the computer to perform the communication method of any one of the first to third aspects described above.

The embodiments of the present disclosure provide a communication method and apparatus, a device, a chip, a storage medium, a product, and a program. A terminal device may use one or more spatial filters to transmit at least one uplink channel and/or uplink signal to a first network device that does not support downlink transmission, and correspondingly, the first network device uses one or more spatial filters to receive the at least one uplink channel and/or uplink signal transmitted by the terminal device, to implement beam sweeping of the at least one uplink channel and/or uplink signal. As such, the first network device may determine the first TA value of the first network device using the uplink channel and/or uplink signal transmitted/received by the one or more spatial filters, and indicate the first TA value to the terminal device through the second network device. In this way, the TA value acquisition method of the first network device that does not support downlink transmission is clarified, thereby ensuring the correct transmission of uplink data and improving the stability of the communication system.

BRIEF DESCRIPTION OF THE DRAWINGS

The drawings described herein are adopted to provide a further understanding to the present disclosure and form a part of the present disclosure. Schematic embodiments of the present disclosure and descriptions thereof are adopted to explain the present disclosure and not intended to form improper limits to the present disclosure. In the drawings:

FIG. 1 illustrates a first schematic diagram of an adjustment format of a timing advance (TA) value.
FIG. 2 illustrates a second schematic diagram of an adjustment format of a TA value.
FIG. 3 illustrates a signaling diagram indicating a TA value.
FIG. 4 illustrates a schematic diagram of a downlink reference timing of a TA value.
FIG. 5 illustrates a first schematic flowchart of a communication method according to an embodiment of the present disclosure.
FIG. 6A illustrates a second schematic flowchart of a communication method according to an embodiment of the present disclosure.
FIG. 6B illustrates a third schematic flowchart of a communication method according to an embodiment of the present disclosure.
FIG. 7 illustrates a schematic diagram of a downlink reference timing of a TA value according to an embodiment of the present disclosure.
FIG. 8 illustrates a schematic diagram of an application scenario according to an embodiment of the present disclosure.
FIG. 9 illustrates a schematic diagram of signaling interaction for TA acquisition of UL-only transmission reception point (TRP) based on a physical downlink control channel (PDCCH) order according to an embodiment of the present disclosure.
FIG. 10 illustrates a schematic diagram of signaling interaction for TA acquisition of UL-only TRP based on a TA timer according to an embodiment of the present disclosure.

FIG. 11 is a schematic structural diagram of a communication apparatus 1100 according to an embodiment of the present disclosure.

FIG. 12 is a schematic structural diagram of a communication apparatus 1200 according to an embodiment of the present disclosure.

FIG. 13 is a schematic structural diagram of a communication apparatus 1300 according to an embodiment of the present disclosure.

FIG. 14 is a schematic structural diagram of a communication device according to an embodiment of the present disclosure.

FIG. 15 is a schematic structural diagram of a chip according to an embodiment of the present disclosure.

FIG. 16 is a schematic block diagram of a communication system according to an embodiment of the present disclosure.

DETAILED DESCRIPTION

The technical solutions in the embodiments of the present disclosure will be described below with reference to the accompanying drawings in the embodiments of the present disclosure. It is apparent that the described embodiments are not all embodiments but only part of embodiments of the present disclosure. All other embodiments obtained by those of ordinary skill in the art on the basis of the embodiments in the present disclosure without creative work shall fall within the scope of protection of the present disclosure.

Unless otherwise defined, all technological and scientific terms used in the disclosure have meanings the same as those usually understood by those skilled in the art of the disclosure. Terms used in the disclosure are only adopted to describe the embodiments of the disclosure and not intended to limit the disclosure.

"Some embodiments" involved in the following descriptions describes a subset of all possible embodiments. However, it is to be understood that "some embodiments" may be the same subset or different subsets of all the possible embodiments, and may be combined without conflicts.

It should also be pointed out that term "first/-second/third" involved in the embodiments of the present disclosure is only for distinguishing similar objects, and does not represent a specific sequence of the objects. It is to be understood that "first/second/third" may be interchanged to specific sequences or orders if allowed to implement the embodiments of the present disclosure described herein in sequences except the illustrated or described ones.

In addition, the term "and/or" in the embodiments of the present disclosure is only an association relationship describing associated objects and represents three relationships. For example, A and/or B may represent the following three cases: independent existence of A, existence of both A and B, and independent existence of B. In addition, the character "/" in the present disclosure generally represents that previous and next associated objects form an "or" relationship.

It is to be understood that the term "indication" mentioned in the embodiments of the present disclosure may be a direct indication, an indirect indication, or an indication of an associative relationship. For example, an indication of B by A may indicate that A directly indicates B, for example, B is obtained through A, or that A indirectly indicates B, for example, A indicates C and B is obtained through C, or that there is an association between A and B.

It is also to be understood that "predefined", "agreed by protocol", "predetermined", or "predefined rule" mentioned in the embodiments of the present disclosure may be implemented by pre-storing the corresponding codes, tables, or other manners for indicating relevant information in the device (for example, a terminal device), and the specific implementations thereof are not limited in the present disclosure. For example, "predefined" may refer to those defined in a protocol. It is also to be understood that in the embodiments of the present disclosure, the "protocol" may refer to a standard protocol in the field of communication, which may include, for example, a Long Term Evolution (LTE) protocol, a New Radio (NR) protocol and relevant protocol applied in the future communication system, which is not limited in the present disclosure.

The technical solutions described in the embodiments of the present disclosure may be arbitrarily combined as long as there is no conflict. In the description of the present disclosure, "a plurality/multiple" means two or more unless specifically defined otherwise.

The technical solutions of the embodiment of the present disclosure can be applied to various communication systems, such as an LTE system, an LTE Time Division Duplex (TDD), a Universal Mobile Telecommunication System (UMTS), an Internet of Things (IoT) system, a Narrow Band Internet of Things (NB-IoT) system, an enhanced Machine-Type Communications (eMTC) system, a 5G communication system (also known as NR communication system), or a future communication system, etc.

In the embodiments of the present disclosure, the terminal device may be a device that provides voice/data to a user, for example, a handheld device with a wireless connection function, a vehicle-mounted device, and the like. At present, some examples of terminals are: an access terminal, User Equipment (UE), a Mobile Phone, a tablet computer, a notebook computer, a palm computer, a Mobile Internet Device (MID), a wearable device, a Virtual Reality (VR) device, an Augmented Reality (AR) device, a wireless terminal in Industrial Control, a wireless terminal in Self Driving, a wireless terminal in Remote Medical Surgery, a wireless terminal in Smart Grid, a wireless terminal in Transportation Safety, a wireless terminal in Smart City, a wireless terminal in Smart Home, a cellular phone, a cordless phone, a Session Initiation Protocol (SIP) telephone, a Wireless Local Loop (WLL) station, a Personal Digital Assistant (PDA), a handheld device with a wireless communication function, a computing device or other processing device connected to a wireless modem, a wearable device, a terminal device in the 5th generation (5G) network, or a terminal device in a future evolved Public Land Mobile Network (PLMN), or the like, which is not limited in the embodiments of the present disclosure.

It is exemplarily but unlimitedly described that, in the embodiments of the present disclosure, the terminal device may also be a wearable device. The wearable device may also be called a wearable smart device, which is a general name of wearable devices applying wearable technology to intelligently design daily wear and develop wearable devices, such as glasses, a glove, a watch, clothing and shoes, etc. The wearable device is a portable device that is directly worn on the body or integrated into the user's clothes or accessories. The wearable device is not only a hardware device, but also realizes powerful functions through software support, data interaction and cloud interaction. The generalized wearable smart device has full functions, large size, complete or partial functions that may be implemented without relying on smart phones, such as a smart watch or smart glasses, etc. The generalized wearable smart device may only focus on certain application functions, and needs to be used together with other devices such as a smart phone, for example, various smart bracelets and smart jewelry for sign monitoring.

In addition, in the embodiments of the present disclosure, the terminal device may also be a terminal device in an IoT system. IoT is an important part of the future development of information technology, and its main technical feature is to connect articles to the network through communication technology, thereby realizing an intelligent network of human-machine interconnection and interconnection of things.

It should be pointed out that the terminal device may communicate with the network device (Network, NW) using some air interface technology (such as NR or LTE technology, etc.). The terminal devices may also communicate with each other using some air interface technology (such as NR or LTE technology, etc.).

It is to be noted that an apparatus for realizing the function of the terminal device may be a terminal device, or may be an apparatus capable of supporting the terminal device to realize the function, for example, a chip system or a chip, and the apparatus may be mounted in the terminal device. In the embodiments of the present disclosure, the chip system may be composed of chips, or may include a chip and other discrete devices.

In the embodiments of the present disclosure, the network device may be an Evolutional Node B (eNB or eNodeB) in an LTE system, a Next Generation Radio Access Network (NG RAN) device, a base station (gNB) in an NR system, or a radio controller in a Cloud Radio Access Network (CRAN), or the network device may be a relay station, an access point, an in-vehicle device, a wearable device, a hub, a switch, a bridge, a router, or a network device in a future evolution PLMN.

In order to facilitate understanding of the technical solutions of the embodiments of the present disclosure, the relevant technology of the embodiments of the present disclosure will be described below. The relevant technology as optional solutions may be combined with the technical solutions of the embodiments of the present disclosure in any way, and shall fall within the scope of protection of the embodiments of the present disclosure.

In the current NR standard, a terminal device may be configured with up to four Timing Advance Groups (TAGs) in one Cell Group (CG), and the Radio Resource Control (RRC) configuration of the TAGs may be as follows.

Generally, one CG may include multiple serving cells, and each serving cell may be assigned a TAG Identifier (ID). Each TAG may have a timer (TimeAlignmentTimer), and the terminal device may time the timer. When the timer expires, the terminal device may consider that the TAG losts synchronization in uplink. The network device may adjust the TA value through a Media Access Control (MAC) Control Element (CE) or other signaling during the running of the timer, so as to reset the timer, and in such case, the terminal device may consider that the TAG is in the uplink synchronization state.

Exemplarily, assuming that the value of the timer is set to be 500 ms, if the network device updates (adjusts) the TA value once within 500 ms, the terminal device may consider the uplink synchronization; otherwise, if the network device does not update (adjust) the TA value once within 500 ms, the terminal device may consider that the uplink is out of synchronization, and may initiate a Random Access Channel (RACH) procedure when the uplink data arrives.

The TA value takes the first path in which the terminal device receives a downlink channel, that is, the first symbol of the slot where the channel is located, as the downlink reference, and on this basis, advance transmission is performed. The TA value is calculated as follows:

$$TA = (N_{TA} + N_{TA,offset}) * T_C \qquad (1)$$

$N_{TA,offset}$ is a timing advance offset preconfigured by each serving cell in a CG; $T_C$ is the minimum time unit in the NR system; $T_C = 1 / (4096 * 480kHz)$; $N_{TA}$ is a TA adjustment amount.

$N_{TA}$ may be calculated in the following two ways.

The first calculation method of $N_{TA}$: $N_{TA}$ may provide differential adjustment through the MAC CE of the network device. That is to say, the current $N_{TA}$ adjustment ($N_{(TA_{new})}$) may be adjusted forward or backward in time on the basis of the previous $N_{TA}$ adjustment

$(N_{(TA_{old})})$. The calculation formula of $N_{TA}$ adjustment is as follows:

$$N_{(TA_{new})} = N_{(TA_{old})} + (T_A - 31)*16*64*/2^{\mu} \qquad (2)$$

$\mu$ is a subcarrier spacing and $T_A$ is a quantized TA value.

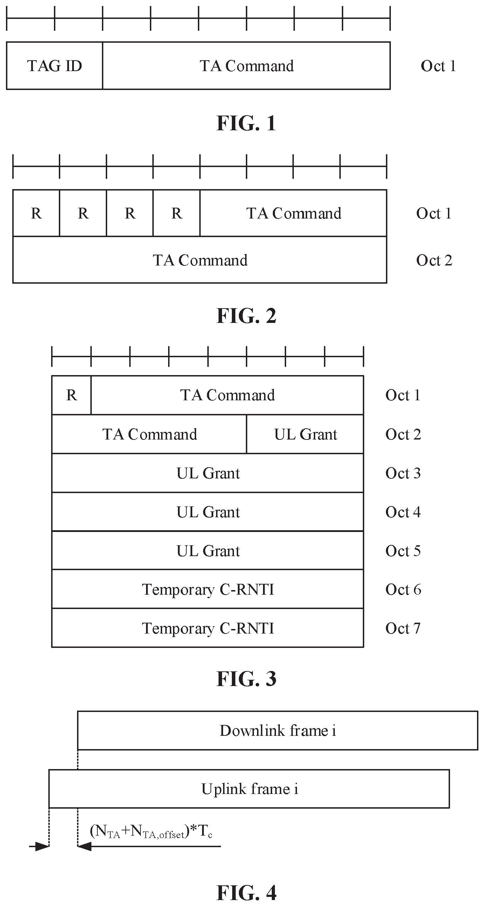

FIG. 1 illustrates a first schematic diagram of an adjustment format of a TA value. The differential adjustment format of the TA value of the MAC CE may be that the original TA is adjusted by $T_A$ minimum time units, and the granularity of the TA adjustment is TAG. As illustrated in FIG. 1, the MAC CE is encoded in 8 bits per byte, where TAG ID is 2bits, TA command (that is, Timing Advance Command) is 6bits, and Oct 1 represents one byte, that is, 8 bits.

The second calculation method of $N_{TA}$: the MAC CE of the network device directly gives an absolute value $N_{TA}$ with a value range of 0 to 3846, and $N_{TA}$ indicates a range of TA, i.e. $N_{TA} = T_A*16*64*2^{\mu}$. In such case, the network device may indicate the TA absolute value of uplink transmission to the terminal device.

FIG. 2 illustrates a second schematic diagram of an adjustment format of a TA value. The TA command may be applied to a Primary Timing Advance Group (PTAG) corresponding to the MAC entity. In such case, since the MAC CE is only applicable to PTAG, it is not necessary to include the TAG ID. As illustrated in FIG. 2, the MAC CE is encoded in 8 bits per byte, where the TA command is 12 bits, Oct 1 represents one byte, Oct 2 represents one byte, that is, Oct 1 and Oct 2 each has 8 bits, and R represents setting 0.

In addition, in the process of initially accessing the cell, after the terminal device transmits the PRACH to the network device, the terminal device may expect the network device to transmit the TA value indication through the MAC Random Access Response (RAR) within a certain time window.

FIG. 3 illustrates a signaling diagram indicating a TA value. As illustrated in FIG. 3, in this signaling, the TA command is 12 bits, the UpLink Grant (UL Grant) is 27 bits, the Temporary Cell-Radio Network Temporary Identifier is 16 bits, each of Oct 1 to Oct 7 represents one byte, each of Oct 1 to Oct 7 has 8 bits, and R represents setting 0. In this way, the terminal device may obtain the initial TA absolute value, and the TA absolute value is 12 bits.

FIG. 4 illustrates a first schematic diagram of a downlink reference timing of a TA value. As illustrated in FIG. 4, if the terminal device operates in the Single Transmission/Reception Point (STRP) mode, the downlink reference timing of the TA value of the terminal device takes a time of $(N_{TA} + N_{TA,offset}) * T_C$ prior to the reception time point of the downlink frame i as the transmission time point of the uplink frame i, thereby transmitting the uplink channel or signal.

The embodiments of the present disclosure relate to an uplink multi-Transmission/Transmission/Reception Point (TRP) communication scheme. Multi-TRP transmission is described below.

In order to enhance the coverage of uplink communication and the reliability of transmission, a terminal device may transmit Physical Uplink Control Channels (PUCCHs)/Physical Uplink Shared Channels (PUSCHs) carrying the same content to different TRPs, that is, the terminal device may support repetition transmission of the uplink PUCCH/PUSCH based on multiple TRPs. In addition, with the popularization of multi-antenna terminal devices, a terminal device may also support a mechanism in which the PUCCH/PUSCH is transmitted to multiple TRPs simultaneously through multiple antenna panels.

In order to further enhance the uplink coverage, a special type of network device (such as TRP) has been introduced into the communication system, which only has the ability of uplink transmission and reception, that is, this type of network device does not support downlink transmission. This type of network device may be referred to as an uplink-only TRP (UL-only TRP).

It is to be understood that, for the FDD system, the UL-only TRP can only realize the reception capability for the uplink spectrum in the FDD, and does not require the transmission capability for the downlink spectrum, thereby reducing the manufacturing cost. In this case, the network can deploy more UL-only TRPs and reduce the distance between terminal devices and TRPs, thereby enhancing uplink coverage capabilities without increasing the complexity of terminal devices.

In practical applications, the terminal device needs to send an uplink channel or signal to the TRP according to the TA value associated with the TRP, so as to avoid the delay in spatial transmission of signaling between the terminal device and the TRP. Therefore, obtaining the TA value of the TRP is a key step in the communication process.

However, since the UL-only TRP has no downlink transmission, the terminal device cannot measure such TRP to obtain a downlink reference timing to transmit the uplink channel and/or signal based on the reference time, and the terminal device cannot estimate the path loss to perform power control on the uplink channel and/or signal. Further, since the UL-only TRP does not support downlink transmission, the terminal device cannot determine the spatial relationship information for transmitting the uplink channel and/or the uplink signal. Therefore, how to determine the TA value of the UL-only TRP is an urgent technical problem to be solved.

Based on this, the embodiments of the present disclosure provide a communication method. A terminal device may use one or more spatial filters to transmit at least one uplink channel and/or uplink signal to a first network device that does not support downlink transmission, and correspondingly, the first network device uses one or more spatial filters to receive the at least one uplink channel and/or uplink signal transmitted by the terminal device, to implement beam sweeping of the at least one uplink channel and/or uplink signal. As such, the first network device may determine the first TA value of the first network device by using the uplink channel and/or uplink signal transmitted/received by the one or more spatial filters. In this way, the TA value acquisition method of the first network device that does not support downlink transmission is clarified, thereby ensuring the correct transmission of uplink data and improving the stability of the communication system.

In order to facilitate understanding of the technical solutions of the embodiments of the present disclosure, the technical solutions of the present disclosure will be described in detail below with reference to specific embodiments. The above relevant technology as optional solutions may be combined with the technical solutions of the embodiments of the present disclosure in any way, and shall fall within the scope of protection of the embodiments of the present disclosure. The embodiments of the present disclosure include at least part of the following contents.

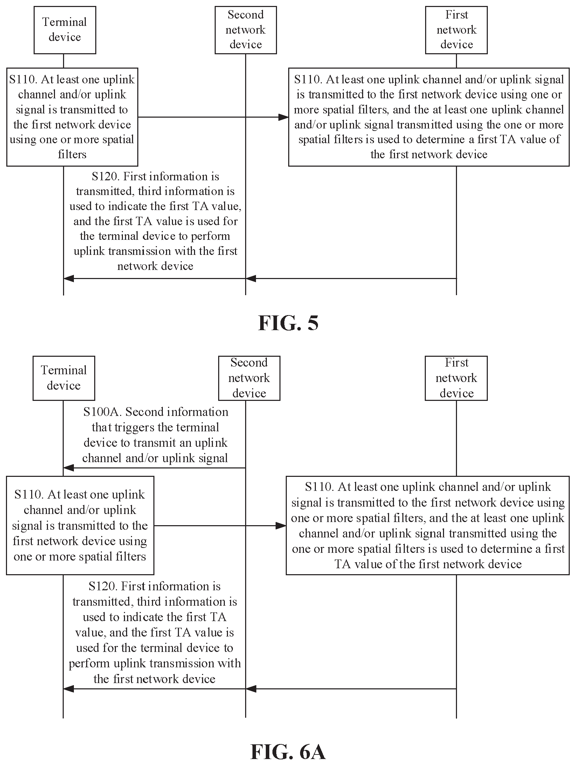

FIG. 5 illustrates a first schematic flowchart of a communication method according to an embodiment of the present disclosure. As illustrated in FIG. 5, the method may include the following operations.

In S110, a terminal device transmits at least one uplink channel and/or uplink signal to a first network device using one or more spatial filters.

Correspondingly, the first network device receives the at least one uplink channel and/or uplink signal transmitted by the terminal device using one or more spatial filters.

The at least one uplink channel and/or uplink signal transmitted by the one or more spatial filters is used to determine a first TA value of the first network device.

In S120, the first network device transmits first information to the terminal device through a second network device. The first information is used to indicate the first TA value, and the first TA value is used for the terminal device to perform uplink transmission with the first network device. The second network device is a network device that supports downlink transmission.

It is to be noted that the first network device may be a network device that does not support downlink transmission. That is, the first network device only supports transmission of the uplink channel and/or the uplink signal, and the first network device has no downlink transmission or even has no transmission of the downlink reference signal. Exemplarily, the first network device may be a UL-only TRP provided by the above-described embodiment. Further, the second network device is a network device that supports downlink transmission; specifically, the second network device may be a network device that supports only downlink transmission, or may be a device that supports uplink transmission and downlink transmission. The second network device may be referred to as a regular network device or a regular TRP, which is not limited in the embodiments of the present disclosure.

It is also to be noted that the second network device and the first network device are connected by a backhaul link. The second network device and the first network device may be directly connected or may be connected through other network devices, which is not limited in the embodiments of the present disclosure. In addition, the terminal device may be within the communication coverage range of the second network device, and may receive downlink information transmitted by the second network device.

Since the first network device does not support downlink transmission, the terminal device cannot determine a spatial filter for transmitting an uplink channel and/or an uplink signal to the first network device through downlink measurement. That is, the terminal device side does not have any downlink measurement from the first network device as a reference, and the terminal device and the first network device cannot determine in advance spatial filters directions of which have better uplink performance, and thus cannot determine TA values applicable to the uplink channel and/or the uplink signal.

Therefore, in the embodiments of the present disclosure, the terminal device may perform beam sweeping of an uplink channel and/or an uplink signal. The beam sweeping of the uplink channel and/or the uplink signal refers to transmitting the uplink channel and/or the uplink signal using beams in different directions, so that the first network device can select an appropriate beam (pair), and then determine an accurate first TA value.

It should be noted that a "spatial filter" may represent a "beam (pair)". The term "beam (pair)" means "beam" or "beam pair". In the embodiments of the present disclosure, a beam may refer to a transmit beam or a receive beam, and a beam pair refers to a pair of transmit beam and receive beam.

That is, in the embodiments of the present disclosure, the terminal device may transmit an uplink channel and/or an uplink signal to the first network device using one or more spatial filters. Correspondingly, the first network device receives the uplink channel and/or the uplink signal transmitted by the terminal device using one or more spatial filters.

In one possible implementation, if the terminal device transmits the uplink channel and/or the uplink signal to the first network device using one spatial filter, the first network device may receive the uplink channel and/or the uplink signal transmitted by the terminal device using a plurality of spatial filters. In this way, sweeping of the uplink receive beam is realized.

In another possible implementation, if the terminal device transmits the uplink channel and/or the uplink signal to the first network device using a plurality of spatial filters, the first network device may receive the uplink channel and/or the uplink signal transmitted by the terminal device using one spatial filter. In this way, sweeping of the uplink transmit beam is realized.

It is to be noted that the operation of the terminal device transmitting the uplink channel and/or the uplink signal to the first network device using one or more spatial filters and the operation of the first network device receiving the uplink channel and/or the uplink signal transmitted by the terminal device using one spatial filter may be predefined in a protocol or determined by the terminal device and the first network device according to implementation, which is not limited in the embodiments of the present disclosure.

It is to be understood that the first network device may measure the uplink channel and/or the uplink signal transmitted by the terminal device through beam sweeping, and determine the first TA value of the first network device based on the measurement result of the uplink signal and/or the uplink channel. Specifically, the first network device may measure uplink channels and/or uplink signals received by the one or more spatial filters, respectively, and select the uplink channel and/or the uplink signal that satisfy the condition (or suitable/better) according to the measurement results; then, the first network device may determine (estimate) a corresponding TA value based on the measurement result of the selected uplink channel and/or uplink signal, and obtain the first TA value of the first network device. In this way, the first network device may determine a spatial filter having better uplink performance by beam sweeping of the terminal device, thereby determining a TA value applicable to the current uplink channel and/or uplink signal from the terminal device.

In some embodiments, the uplink channel and/or uplink signal may include a Physical Random Access Channel (PRACH), and/or a Sounding Reference Signal (SRS).

It can be understood that the uplink signal may include an SRS, and the uplink channel may include a PRACH.

In some embodiments, the measurement result of the uplink signal and/or the uplink channel may include, but is not limited to, one or more of: a Reference Signal Receiving Power (RSRP) result of the uplink signal and/or the uplink channel, a Time of Arrive (ToA) result of the uplink signal and/or the uplink channel, a Signal to Noise Ratio (SNR) result, a TA result, and the like.

Further, after the first network device measures the uplink channel and/or the uplink signal transmitted through beam sweeping by the terminal device and determines the first TA value of the first network device, the first network device may indicate the first TA value to the second network device supporting downlink transmission, and then, the second network device may transmit the first information to the terminal device and indicate the first TA value to the terminal device by the first information.

In some embodiments, the first information transmitted by the second network device to the terminal device may be RRC signaling or MAC CE signaling (for example, Absolute TA MAC CE), which is not limited in the embodiments of the present disclosure.

In the communication method provided by the embodiments of the present disclosure, the terminal device may use one or more spatial filters to transmit at least one uplink channel and/or uplink signal to the first network device that does not support downlink transmission, and correspondingly, the first network device uses one or more spatial filters to receive the at least one uplink channel and/or uplink signal transmitted by the terminal device, so as to realize beam sweeping of the at least one uplink channel and/or uplink signal. As such, the first network device may determine the first TA value of the first network device using the uplink channel and/or uplink signal transmitted/received by the one or more spatial filters. In this way, the TA value acquisition method of the first network device that does not support downlink transmission is clarified, thereby ensuring the correct transmission of uplink data and improving the stability of the communication system.

In an embodiment of the present disclosure, the at least one uplink channel and/or uplink signal transmitted by the terminal device through one or more spatial filters is associated with one or more transmission resources. Correspondingly, the uplink channel and/or uplink signal received by the first network device through one or more spatial filters may be associated with one or more transmission resources.

It is to be understood that the terminal device and the first network device may utilize one or more transmission resources associated with the one or more spatial filters to perform beam sweeping of the uplink channel and/or the uplink signal. Specifically, the terminal device may transmit an uplink channel and/or an uplink signal to the first network device on the one or more transmission resources using one or more spatial filters associated with the one or more transmission resources, or the terminal device may transmit, through one or more spatial filters, an uplink channel and/or an uplink signal to the first network device on transmission resources associated with the one or more spatial filters. In addition, the first network device may receive the uplink channel and/or the uplink signal transmitted by the terminal device on one or more transmission resources using one or more spatial filters associated with the one or more transmission resources, or the first network device may receive, through one or more spatial filters, the uplink channel and/or the uplink signal transmitted by the terminal device on one or more transmission resources associated with the one or more spatial filters.

Since the first network device does not support downlink transmission, the first network device cannot configure a spatial filter related to uplink transmission for the terminal device through downlink signaling (e.g., a transmission configuration indicator (TCI) state). In the embodiments of the present disclosure, one or more spatial filters may be associated with one or more transmission resources, so that a spatial filter can be represented by the transmission resource associated with the spatial filter.

It should be noted that transmission resources associated with different spatial filters may be the same or different, which is not limited in the embodiments of the present disclosure.

It should also be noted that the uplink channel and/or the uplink signal transmitted by the one or more spatial filters are associated with one or more transmission resources, and the one or more transmission resources herein may be configured by the network or may be selected by the terminal device itself, which is not limited in the embodiments of the present disclosure.

Exemplarily, the one or more transmission resources may be configured by the second network device for the terminal device. The one or more transmission resources may be one or more dedicated transmission resources for the terminal device to transmit an uplink channel and/or an uplink signal to the first network device, or may be one or more transmission resources of the second network device, which is not limited in the embodiments of the present disclosure.

Exemplarily, the one or more transmission resources may be pre-configured, or may be selected by the terminal device from predefined candidate transmission resources.

In some embodiments, the transmission resource may include one or more of the following: a transmission occasion, and a preamble sequence.

In one possible implementation, the terminal device may transmit an uplink channel and/or an uplink signal to the first network device in one or more transmission occasions using one or more spatial filters associated with the one or more transmission occasions, or the terminal device may transmit, through one or more spatial filters, an uplink channel and/or an uplink signal to the first network device in one or more transmission occasions associated with the one or more spatial filters. Alternatively, the first network device may receive the uplink channel and/or the uplink signal transmitted by the terminal device in one or more transmission occasions using one or more spatial filters associated with the one or more transmission occasions, or the first network device may receive, through one or more spatial filters, the uplink channel and/or the uplink signal transmitted by the terminal device in one or more transmission occasions associated with the one or more spatial filters.

Exemplarily, if the uplink channel and/or uplink signal is a PRACH, the transmission occasion may be a Random Access Channel (RACH) occasion. That is, the terminal device may transmit the PRACH to the first network device using one or more spatial filters in one or more RACH occasions. Correspondingly, the first network device may receive the PRACH transmitted by the terminal device using one or more spatial filters in one or more RACH occasions.

Exemplarily, if the uplink channel and/or uplink signal is an SRS, the transmission occasion may be an SRS resource. That is, the terminal device may transmit the SRS to the first network device using one or more spatial filters on one or more SRS resources. Correspondingly, the first network device may receive the SRS transmitted by the terminal device using one or more spatial filters on one or more SRS resources.

In another possible implementation, the terminal device may use one or more preambles to transmit an uplink channel and/or an uplink signal to the first network device using one or more spatial filters associated with the one or more preambles. Correspondingly, the first network device may use one or more spatial filters to receive the uplink channel and/or uplink signal transmitted using one or more preambles.

In some embodiments, the at least one uplink channel and/or uplink signal transmitted by the one or more spatial filters being associated with one or more transmission resources may include one or more of the following:

uplink channels and/or uplink signals transmitted by multiple spatial filters are associated with multiple transmission resources, and different spatial filters are associated with different transmission resources;

uplink channels and/or uplink signals transmitted by multiple spatial filters are associated with one transmission resource; and

uplink channels and/or uplink signals transmitted by one spatial filter are associated with multiple transmission resources.

It is to be understood that in one possible implementation, the terminal device may transmit uplink channels and/or uplink signals to the first network device using different spatial filters (e.g., spatial transmission filters) on multiple transmission resources. In another possible implementation, the terminal device may transmit uplink channels and/or uplink signals to the first network device using multiple spatial filters (e.g., spatial transmission filters) on the same transmission resource. In yet another possible implementation, the terminal device may transmit uplink channels and/or uplink signals to the first network device using the same spatial filter (e.g., a spatial transmission filter) on multiple transmission resources.

Correspondingly, for the first network device on the network side, the uplink channel and/or the uplink signal received by the one or more spatial filters being associated with the one or more transmission resources may include one or more of the following:

uplink channels and/or uplink signals received by multiple spatial filters are associated with multiple transmission resources, and different spatial filters are associated with different transmission resources;

uplink channels and/or uplink signals received by multiple spatial filters are associated with one transmission resource; and

uplink channels and/or uplink signals received by one spatial filter are associated with multiple transmission resources.

It is to be understood that in one possible implementation, the first network device may receive the uplink channels and/or uplink signals transmitted by the terminal device using different spatial filters (e.g., spatial reception filters) on multiple transmission resources. In another possible implementation, the first network device may receive the uplink channels and/or uplink signals transmitted by the terminal device using multiple spatial filters (e.g., spatial reception filters) on the same transmission resource. In yet another possible implementation, the first network device may receive the uplink channels and/or uplink signals transmitted by the terminal device using the same spatial filter (e.g., a spatial reception filter) on multiple transmission resources.

Exemplarily, the terminal device transmits the uplink channel and/or uplink signal to the first network device using one or more spatial filters, which may include one or more of the following modes.

The terminal device transmits uplink channels and/or uplink signals to the first network device using multiple spatial filters (e.g., spatial transmission filters) in one transmission occasion. The uplink channels and/or uplink signals transmitted by multiple spatial filters are associated with multiple preamble sequences.

The terminal device transmits uplink channels and/or uplink signals to the first network device using different spatial filters (e.g., spatial transmission filters) in multiple transmission occasions.

The terminal device transmits an uplink channel and/or an uplink signal to the first network device using one spatial filter in one transmission occasion.

The terminal device transmits uplink channels and/or uplink signals to the first network device using the same spatial filter (e.g., a spatial transmission filter) in multiple transmission occasions.

Correspondingly, the first network device receives the uplink channel and/or uplink signal transmitted by the terminal device using one or more spatial filters, which may include one or more of the following modes.

The first network device receives uplink channels and/or uplink signals transmitted by the terminal device using a plurality of spatial filters (e.g., a spatial reception filter) in one transmission occasion. The uplink channels and/or uplink signals received by the plurality of spatial filters are associated with a plurality of preamble sequences.

The first network device receives an uplink channel and/or an uplink signal transmitted by the terminal device using one spatial filter in one transmission occasion.

The first network device receives uplink channels and/or uplink signals transmitted by the terminal device using different spatial filters (e.g., spatial reception filters) in multiple transmission occasions.

The first network device receives uplink channels and/or uplink signals transmitted by the terminal device using the same spatial filter (e.g., a spatial reception filter) in multiple transmission occasions.

In one possible implementation, if the terminal device and the first network device support simultaneous transmission of multiple panels, the terminal device may use multiple different spatial filters (e.g., spatial transmission filters) to transmit an uplink channel and/or uplink signal to the first network device in the same transmission occasion. Correspondingly, the first network device may use multiple spatial filters (e.g., spatial reception filters) to receive the uplink channel and/or uplink signal transmitted by the terminal device in one transmission occasion.

In this scenario, for the terminal device, in order to distinguish among different spatial filters, the preamble sequences associated with uplink channels and/or uplink signals transmitted by the terminal device using different spatial filters (e.g., spatial transmission filters) may be different, or the terminal device may transmit uplink channels and/or uplink signals on different spatial filters (e.g., spatial transmission filters) using different preamble sequences. It is to be understood that, since different preamble sequences are associated with different spatial filters of the terminal device, the preamble sequence may be used to indicate the spatial filter used by the terminal device.

It is to be noted that the terminal device and the first network device use a plurality of different spatial filters for uplink channel and/or uplink signal transmission in the same transmission occasion, and multiple panels are required to perform different receive beamforming.

In another possible implementation, the terminal device may use a spatial filter (e.g., one spatial transmission filter) to transmit an uplink channel and/or uplink signal to the first network device in one transmission occasion. Correspondingly, the first network device may use different spatial filters to receive the uplink channel and/or uplink signal transmitted by the terminal device in the transmission occasion. In this way, sweeping of the uplink receive beams of the first network device is realized. Alternatively, the terminal device transmits an uplink channel and/or uplink signal to the first network device using multiple different spatial filters (e.g., spatial transmission filters) in the same transmission occasion, and correspondingly, the first network device may use the same spatial filter to receive the uplink channel and/or the uplink signal transmitted by the terminal device in one transmission occasion. In this way, sweeping of the uplink transmit beams of the terminal device is realized.

In another possible implementation, the terminal device may use different spatial filters (e.g., spatial transmission filters) to transmit an uplink channel and/or uplink signal to the first network device in multiple transmission occasions for sweeping of uplink transmit beams. Correspondingly, the first network device may receive the uplink channel and/or uplink signal transmitted by the terminal device using the same spatial filter (e.g., one spatial reception filter) in multiple transmission occasions.

In this scenario, for the terminal device, since different transmission occasions are associated with different spatial filters, the transmission occasion may be used to represent the spatial filter used by the terminal device.

In another possible implementation, the terminal device may transmit an uplink channel and/or uplink signal to the first network device using the same spatial filter (e.g. one spatial transmission filter) in multiple transmission occasions for sweeping of uplink receive beams. Correspondingly, the first network device may receive the uplink channel and/or uplink signal transmitted by the terminal device using different spatial filters (e.g., spatial reception filters) in the multiple transmission occasions. In this scenario, the spatial filters represented by different transmission occasions are the same for the terminal device.

It should be noted that the terminal device may select any one of the above three modes to transmit the uplink channel and/or uplink signal to the first network device according to a predefined rule in a protocol. In addition, the terminal device may select any one of the above three modes to transmit the uplink channel and/or uplink signal to the first network device according to a specific implementation, or the terminal device may select any one of the above three modes to transmit the uplink channel and/or uplink signal to the first network device according to a preset rule. For example, the terminal device may measure downlink reference signals of other neighboring cells other than the first network device, and determine to transmit the uplink channel and/or uplink signal using the same or different spatial filters in different transmission occasions according to the measurement results of the downlink reference signals of the neighboring cells. The downlink signal includes, but is not limited to, a Synchronization Signal and PBCH Block (SSB) and/or a Channel State Information-Reference Signal (CSI-RS).

Similarly, the first network device may select any one of the above three modes to receive the uplink channel and/or uplink signal transmitted by the terminal device according to a predefined rule in a protocol. In addition, the first network device may select any one of the above three modes to receive the uplink channel and/or uplink signal transmitted by the terminal device according to a specific implementation, or the first network device may select any one of the above three modes to receive the uplink channel and/or uplink signal transmitted by the terminal device according to a preset rule.

In the embodiments of the present disclosure, the first network device may measure an uplink channel and/or uplink signal transmitted by the terminal device through beam sweeping, and determine a first TA value of the first network device based on a measurement result of the uplink signal and/or uplink channel.

In some embodiments, if uplink channels and/or uplink signals received by one or more spatial filters are associated with one or more transmission resources, that is, if the first network device receives the uplink channels and/or uplink signals on the one or more transmission resources using the associated one or more spatial filters, the first network device may measure the uplink channels and/or uplink signals received on the one or more transmission resources, and obtain measurement results corresponding to the one or more transmission resources. Further, the first network device may select a transmission resource satisfying the first condition based on the measurement results corresponding to the one or more transmission resources.

In some embodiments, the first condition may include one or more of the following:

a transmission resource associated with the uplink channel and/or uplink signal having the highest receiving power (e.g., RSRP) among the one or more transmission resources;

a transmission resource associated with the uplink channel and/or uplink signal having the largest signal-to-noise ratio (SNR) among the one or more transmission resources;

a transmission resource associated with the uplink channel and/or uplink signal having the smallest TA value among the one or more transmission resources.

It is to be understood that the first network device may select a transmission resource (referred to as the first transmission resource in the embodiments of the present disclosure) corresponding to an appropriate or better uplink channel and/or uplink signal based on the measurement results of the uplink channels and/or the uplink signals. The first transmission resource may be associated with a spatial filter. That is, the first network device measures uplink channels and/or the uplink signals transmitted by the terminal device through beam sweeping, and selects the first transmission resource corresponding to the appropriate or better uplink channel and/or uplink signal. In this way, the first network device may determine that the spatial filter associated with the first transmission resource has good uplink performance, thereby determining a TA value suitable for the current uplink channel and/or uplink signal of the terminal device. In other words, the first TA value of the first network device in the embodiments of the present disclosure is determined by the first network device based on the measurement result of the uplink channel and/or uplink signal associated with the first transmission resource. The first transmission resource is a transmission resource that is associated with an uplink channel and/or uplink signal satisfying the first condition among the one or more transmission resources.

In an embodiment of the present disclosure, in S120, the operation that the first network device transmits the first information to the terminal device through the second network device may be implemented in the following manner.

The first network device transmits third information to the second network device. The third information triggers the second network device to transmit the first information to the terminal device, and the third information indicates the first TA value.

The second network device transmits the first information to the terminal device. The first information indicates the first TA value, and the first TA value is used for the terminal device to perform uplink transmission with the first network device.

In an embodiment of the present disclosure, there are multiple modes in which the second network device indicates the first TA value to the terminal device through the first information. In a possible implementation, the first network device and the second network device may belong to the same TAG, the second network device does not independently indicate the first TA value of the first network device, and the indication of the first TA value depends on the second TA value of the second network device to a certain extent. In another possible implementation, the first network device and the second network device belong to different TAGs, and the second network device may independently indicate the first TA value and the second TA value, respectively. The indication of the first TA value will be described below with reference to Mode #A and Mode #B.

Mode #A: the first network device and the second network device may belong to the same TAG.

In one possible implementation, the first information may include: a reference TA value; a first TA offset associated with the first network device; and a second TA offset associated with the second network device. The first TA value of the first network device is determined based on the reference TA value and the first TA offset.

In this implementation, the second network device may configure a plurality of TA offsets for the TAG through the first information, different TA offsets are respectively provided to different network devices for use, and each network device is configured with an independent TA offset. Different network devices in the TAG share the reference TA value.

That is, the second network device may configure the first TA offset for the first network device and configure the second TA offset for the second network device, respectively. The first TA value of the first network device may be determined based on the reference TA value and the first TA offset, and the second TA value of the second network device may be determined based on the reference TA value and the second TA offset.

In another possible implementation, the first information may include: a second TA value of the second network device; and a first difference value associated with the first network device.

The first TA value of the first network device is determined based on the second TA value and the first difference value.

In this implementation, the second network device may directly indicate the second TA value of the second network device and the first difference value through the first information. The first difference value may be a difference value of the first TA value of the first network device with respect to the second TA value of the second network device.

In this way, the first TA value of the first network device may be obtained based on the second TA value and the first difference value. Compared with the previous implementation, indicating the first TA by the first difference value can reduce the amount of data carried by the first information and reduce the data overhead.

In another possible implementation, the first information may include: a first difference value associated with the first network device; and a second difference value associated with the second network device. The first TA value is determined based on the first difference value and the historical TA value of the first network device.

In this implementation, the second network device may indicate the first difference value for the first network device and the second difference value for the second network device. It is to be noted that the first difference value in this implementation is a difference value between a new first TA value and an old first TA value. That is, the differential basis of the first difference value is a historical first TA value of the first network device. Similarly, the second difference value is a difference value between a new second TA value and an old second TA value, that is, the differential basis of the second difference value is a historical second TA value of the second network device.

It is to be understood that the terminal device may determine the current new first TA value based on the first difference value indicated by the first information and the historical first TA value of the first network device. Further, the terminal device may determine the current new second TA value based on the second difference value indicated by the first information and the historical second TA value of the second network device.

In this implementation, the second network device may only carry the difference value associated with each network device, which may further reduce the data amount of the first information, and reduce the data overhead.

Mode #B: the first network device and the second network device belong to different TAGs.

The first information includes: a reference TA value; and a first TA offset associated with the first network device. The first TA value is determined based on the reference TA value and the first TA offset. The downlink reference timing of the first TA value is the same as the downlink reference timing of the second TA value of the second network device.

It is to be understood that, since the first network device and the second network device belong to different TAGs, the second network device may independently indicate the first TA value of the first network device. In an embodiment of the present disclosure, the second network device may configure an independent TA value and an independent first TA offset for the first network device through the first information.

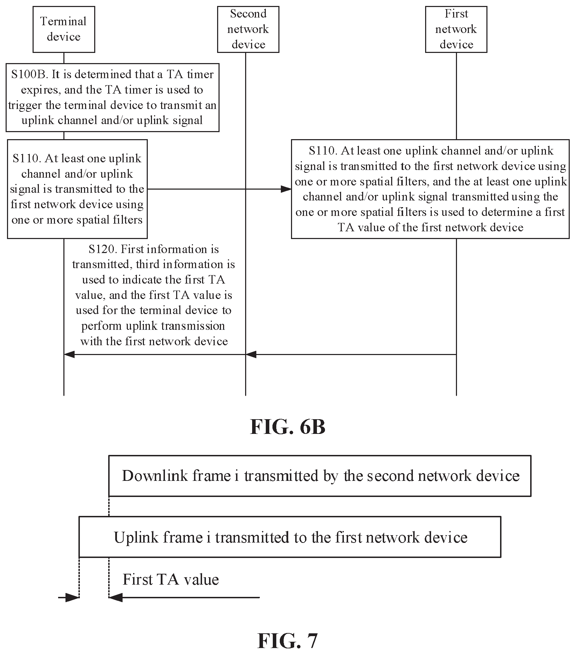

In this implementation, since the first network device does not support downlink transmission, there is no independent downlink reference timing. Based on this, the downlink reference timing of the first TA value of the first network device may be based on the downlink reference timing of the second TA value of the second network device. That is, the first TA value may be timed advanced based on the downlink reference timing of the second TA value of the second network device. For example, as illustrated in FIG. 7, since the first network device does not support downlink transmission, the downlink reference timing of the first TA value of the first network device may be the time point when the second network device transmits the downlink frame i, that is, when the terminal device transmits the uplink frame i to the first network device, the transmission is performed by advancing the first TA value from the time point of the downlink frame i of the second network device.

In some embodiments, if the one or more spatial filters are associated with one or more transmission resources, the third information transmitted by the first network device to the second network device may indicate the first transmission resource corresponding to the first TA value. The spatial filter used by the terminal device is characterized by the first transmission resource for beam indication.

It is to be noted that the first TA value of the first network device is determined based on the measurement result of the uplink channel and/or uplink signal associated with the first transmission resource. The first transmission resource is a transmission resource among the one or more transmission resources that is associated with an uplink channel and/or uplink signal satisfying the first condition. The description on the first network device selects the first transmission resource from one or more transmission resources may refer to the description in the above embodiments, which will not be repeated for the sake of brevity.

Correspondingly, the first information transmitted by the second network device to the terminal device may indicate the first transmission resource.

It is to be understood that, since the one or more spatial filters are associated with the one or more transmission resources, the first network device may use the selected first transmission resource to indicate the spatial filter of the terminal device. This is because the terminal device transmits an uplink channel and/or an uplink signal to the first network device on one or more transmission resources using one or more spatial filters associated with the one or more transmission resources.

Therefore, the terminal device knows the spatial filter associated with each transmission resource. In this way, when the first network device cannot configure the TCI state for the terminal device through the downlink channel, the beam indication may be performed using the transmission resource.

In the communication method provided by the embodiments of the present disclosure, the terminal device may use one or more spatial filters to transmit at least one uplink channel and/or uplink signal to the first network device that does not support downlink transmission, and correspondingly, the first network device uses one or more spatial filters to receive the at least one uplink channel and/or uplink signal transmitted by the terminal device, to realize beam sweeping of the at least one uplink channel and/or uplink signal. As such, the first network device may determine the first TA value of the first network device using the uplink channel and/or uplink signal transmitted/received by the one or more spatial filters. In this way, the TA value acquisition method of the first network device that does not support downlink transmission is clarified, thereby ensuring the correct transmission of uplink data and improving the stability of the communication system.

In an embodiment of the present disclosure, there are multiple modes of triggering the terminal device to acquire the first TA value of the first network device, that is, there are multiple modes of triggering the terminal device to transmit an uplink channel and/or an uplink signal to the first network device using one or more spatial filters to acquire the first TA value. In one possible implementation, the operation that the terminal device transmits an uplink channel and/or an uplink signal to the first network device using one or more spatial filters to acquire the first TA value may be triggered by the network. In another possible implementation, the operation that the terminal device transmits an uplink channel and/or an uplink signal to the first network device using one or more spatial filters to acquire the first TA value may be triggered by a TA timer. The detailed procedure of triggering the terminal device to transmit an uplink channel and/or an uplink signal to the first network device using one or more spatial filters will be described below with reference to Mode #1 and Mode #2.

Mode #1: The operation that the terminal device transmits an uplink channel and/or an uplink signal to the first network device using one or more spatial filters to acquire the first TA value is triggered by the network.

Referring to FIG. 6A, in an embodiment of the present disclosure, before the terminal device transmits the at least one uplink channel and/or uplink signal to the first network device using one or more spatial filters in S110, the following operation may be further included.

In S100A, the terminal device receives second information transmitted by the second network device, and the second information triggers the terminal device to transmit the uplink channel and/or uplink signal.

That is, the operation in S110 that the terminal device transmits the at least one uplink channel and/or uplink signal to the first network device using one or more spatial filters may be triggered based on the second information received in S100.

In some embodiments, the second network device may trigger the terminal device to access the first network device according to the actual demand and obtain the first TA value of the first network device. Exemplarily, the first network device is a network device deployed indoors, and the second network device is a network device deployed outdoors. When the terminal device is close to the first network device and far away from the second network device, the second network device may transmit the second information to the terminal device, trigger the terminal device to transmit an uplink channel and/or an uplink signal to the first network device to obtain the first TA value of the first network device, thereby improving the uplink coverage of the terminal device.

In some embodiments, the second information may be a dedicated signaling, that is, signaling dedicated to instructing the terminal device to transmit an uplink channel and/or an uplink signal to the first network device to obtain the TA value of the first network device.

In some embodiments, the second information may be a PDCCH command, that is, a PDCCH order. That is, the second network device may trigger the terminal device to perform beam sweeping of the uplink channel and/or uplink signal on the first network device through the PDCCH order.

It should be noted that the second information may be other information for triggering the terminal device to transmit an uplink channel and/or an uplink signal to the first network device, which is no limited in the embodiments of the present disclosure.

In some embodiments, the second information may indicate one or more transmission resources.

It is to be understood that when the second network device triggers the terminal device to acquire the first TA value of the first network device, the second network device may indicate a transmission resource(s) used by the uplink channel and/or uplink signal transmitted by the terminal device through beam sweeping, so that the terminal device may transmit the uplink channel and/or the uplink signal to the first network device using one or more spatial filters on the indicated transmission resource(s), to realize beam sweeping of the uplink channel and/or the uplink signal.

Correspondingly, the second network device may indicate the one or more transmission resources to the first network device. In this way, the first network device may receive the uplink channel and/or uplink signal transmitted by the terminal device on the indicated one or more transmission resources. Further, the first network device may estimate the first TA value according to the received uplink channel and/or uplink signal.

In some embodiments, the terminal device may associate one or more transmission resources indicated by the second network device with one or more spatial filters. The terminal device may transmit an uplink channel and/or an uplink signal to the first network device on one or more transmission resources using one or more associated spatial filters. In this way, the network may utilize transmission resources to indicate the spatial filters, thereby enabling beam indication.

The correlation relationship between one or more transmission resources and one or more spatial filters may refer to the description in the above embodiments, which will not be repeated for the sake of brevity.

In some embodiments, the transmission resource may include one or more of the following: a preamble sequence; and a transmission occasion.

Exemplarily, the second information may include index values of one or more preamble sequences and/or index values of one or more transmission occasions. It should be noted that the index values of one or more preamble sequences may be replaced with identifiers (IDs) of the one or more preamble sequences, and similarly, the index values of one or more transmission occasions may be replaced with IDs of the one or more transmission occasions. As long as different preamble sequences and transmission occasions can be distinguished, all of them are within the scope of protection of the embodiments of the present disclosure.

It is to be understood that the second network device may indicate one or more preamble sequences and/or transmission occasions for uplink channel and/or uplink signal beam sweeping for the terminal device through the second information. As such, the terminal device may transmit an uplink channel and/or an uplink signal to the first network device using one or more spatial filters based on one or more preamble sequences and/or one or more transmission occasions.

Exemplarily, the terminal device transmits uplink channels and/or uplink signals to the first network device using multiple spatial filters (e.g., spatial transmission filters) in one transmission occasion. The uplink channels and/or uplink signals transmitted by multiple spatial filters are associated with multiple preamble sequences. Alternatively, the terminal device transmits an uplink channel and/or an uplink signal to the first network device using different spatial filters (e.g., spatial transmission filters) in multiple transmission occasions. Alternatively, the terminal device transmits an uplink channel and/or an uplink signal to the first network device using the same spatial filter (e.g., one spatial transmission filter) in multiple transmission occasions.

In some embodiments, the second network device may also indicate to the first network device one or more preamble sequences and/or transmission occasions for uplink channel and/or uplink signal beam sweeping. As such, the first network device may receive an uplink channel and/or an uplink signal transmitted by the terminal device using one or more spatial filters based on the one or more preamble sequences and/or one or more transmission occasions.

Exemplarily, the first network device receives uplink channels and/or uplink signals transmitted by the terminal device using multiple spatial filters (e.g., spatial reception filters) in one transmission occasion. The uplink channels and/or uplink signals received by the multiple spatial filters are associated with multiple preamble sequences. Alternatively, the first network device receives the uplink channel and/or uplink signal transmitted by the terminal device using different spatial filters (e.g., spatial reception filters) in multiple transmission occasions. Alternatively, the first network device receives the uplink channel and/or uplink signal transmitted by the terminal device using the same spatial filter (e.g., one spatial reception filter) in multiple transmission occasions.

In a possible implementation, the one or more transmission occasions indicated by the second information may be a dedicated transmission occasion(s) for the terminal device to transmit an uplink channel and/or an uplink signal to the first network device. For example, the second network device may configure a transmission occasion dedicated to the first network device for the terminal device through RRC signaling in advance. In this way, when the second network device determines that the terminal device is to initiate access to the first network device, the second network device may transmit the second information to the terminal device, and indicates one or more transmission occasions through the second information.

In another possible implementation, the one or more transmission occasions indicated by the second information may be a transmission occasion(s) associated with the first downlink reference signal. That is, an index value of the one or more transmission occasions carried in the second information is an index value of the transmission occasion associated with the first downlink reference signal. The first downlink reference signal is any one of multiple downlink reference signals transmitted by the second network device.

It is to be understood that the second network device may indicate to the terminal device one or more uplink transmission occasions associated with one of its own downlink reference signals (referred to as the first downlink reference signal in the embodiments of the present disclosure). In this way, the terminal device may implement beam sweeping of an uplink channel and/or uplink signal with the first network device using one or more uplink transmission occasions associated with the first downlink reference signal of the second network device.

Exemplarily, the second information may include one or more PRACH Mask Indexes for indicating one or more RACH occasions associated with the SSB indicated by the second network device. That is, the second network device may lend one or more RACH occasions associated with the SSB to the first network device for use.

It should be noted that the first downlink reference signal may be configured by the second network device (for example, configured by RRC signaling) or may be selected by the terminal device itself, which is not limited in the embodiments of the present disclosure. The terminal device selects the first downlink reference signal, which may be implemented as follows: the terminal device may measure one or more downlink reference signals associated with the second network device, and select an appropriate downlink reference signal (for example, a downlink reference signal with the largest RSRP and/or a downlink reference signal with the largest SNR) as the first downlink reference signal according to the measurement result. The downlink reference signal associated with the terminal device may be an SSB or a CSI-RS, which is not limited in the embodiments of the present disclosure.

Mode #2: The operation that the terminal device transmits an uplink channel and/or an uplink signal to the first network device using one or more spatial filters to acquire the first TA value is triggered by a timer.

Referring to FIG. 6B, in an embodiment of the present disclosure, before the terminal device transmits the at least one uplink channel and/or uplink signal to the first network device using one or more spatial filters in S110, the following operation may be further included.

In S100B, the terminal device determines that a TA timer expires, and the TA timer is used to trigger the terminal device to transmit the uplink channel and/or uplink signal.

That is, the operation in S110 that the terminal device transmits the at least one uplink channel and/or uplink signal to the first network device using one or more spatial filters may be triggered when the TA timer expires.

It is to be understood that the terminal device may maintain a TA timer, and when the TA timer expires, the terminal device may consider to be out of uplink synchronization with the first network device. Since the first network device is a network device that does not support downlink transmission, the terminal device may transmit an uplink channel and/or an uplink signal to the first network device using one or more spatial filters in the case that the TA timer is determined to be timeout.

In the embodiment of the present disclosure, since the operation that the terminal device transmits the at least one uplink channel and/or uplink signal to the first network device using one or more spatial filters to perform beam sweeping of the uplink channel and/or uplink signal is triggered by the TA timer, when the terminal device performs beam sweeping, it is necessary to determine one or more transmission resources for the beam sweeping first.

In some embodiments, the one or more transmission resources are configured by the second network device or selected by the terminal device from candidate transmission resources.

It is to be understood that since the first network device does not support downlink transmission, one or more transmission resources used when the terminal device transmits an uplink channel and/or uplink signal to the first network device using one or more spatial filters to perform beam sweeping of the uplink channel and/or uplink signal may be configured by the second network device, or select by the terminal device from candidate transmission resources.

In one possible implementation, the second network device may configure one or more transmission resources for the terminal device in advance through RRC signaling. Exemplarily, the second network device may configure one or more transmission resources for the terminal device by means of RRC preconfiguration. Alternatively, the second network device may indicate the downlink reference signal for the first network device to the terminal device by RRC preconfiguration, and the terminal device may use one or more transmission resources associated with the downlink reference signal indicated by the second network device as one or more transmission resources for beam sweeping.

In another possible implementation, the terminal device may select one or more transmission resources from candidate transmission resources according to a preset rule. The candidate transmission resources may be pre-configured or predefined, which is not limited in the embodiments of the present disclosure.

Exemplarily, the terminal device may measure downlink reference signals of the second network device, select an appropriate downlink reference signal according to the measurement result, and use one or more transmission resources associated with the selected downlink reference signal as one or more transmission resources for beam sweeping.

In some embodiments, the one or more transmission resources may include one or more of the following: one or more transmission occasions; and one or more preamble sequences.

In some embodiments, the one or more transmission occasions determined by the terminal device may be a transmission occasion(s) dedicated to the first network device.

In some embodiments, the one or more transmission occasions determined by the terminal device may be a transmission occasion(s) associated with a downlink reference signal (referred to as the first downlink reference signal in the embodiments of the present disclosure) of the second network device.

It should be noted that the first downlink reference signal may be configured by the second network device (for example, configured by RRC signaling) or may be selected by the terminal device itself, which is not limited in the embodiments of the present disclosure. When the terminal device selects the first downlink reference signal, the terminal device may measure one or more downlink reference signals associated with the second network device, and select an appropriate downlink reference signal (for example, a downlink reference signal with the largest RSRP and/or a downlink reference signal with the largest SNR) as the first downlink reference signal according to the measurement result. The downlink reference signal associated with the terminal device may be an SSB or a CSI-RS, which is not limited in the embodiments of the present disclosure.

It is to be noted that, the terminal device may simultaneously perform power control in the process that the terminal device transmits the uplink channel and/or the uplink signal to the first network device using one or more spatial filters in S110.

In some embodiments, the transmit power of the terminal device for transmitting the uplink channel and/or the uplink signal is configured/indicated by the second network device.

It is to be understood that, since the first network device does not support downlink transmission, the terminal device cannot determine the path loss of the first network device. Based on this, the terminal device may support a preconfigured or predefined transmit power. The terminal device may preconfigure or predefine one or more transmit powers. The second network device may indicate one of the one or more transmit powers for the terminal device.

Exemplarily, the terminal device may preconfigure or predefine four transmit powers: 23 dBm, 20 dBm, 17 dBm, and 14 dBm. The second network device may use 2 bits to indicate one of the transmit powers for transmitting the PRACH.

Exemplarily, the second network device may indicate one of the one or more transmit powers for the terminal device according to the deployment of the first network device and the second network device.

It is to be noted that, if the preconfigured or predefined transmit power has only one value, the second network device does not need to indicate, and the terminal device may transmit the PRACH using the preconfigured or predefined transmit power.

In some embodiments, the terminal device may determine the transmit power at which the terminal device transmits an uplink channel and/or uplink signal based on the path loss and path loss offset parameters of the second network device.

The path loss of the second network device is determined based on the first downlink reference signal. The first downlink reference signal is any one of multiple downlink reference signals associated with the second network device.

It is to be understood that the terminal device may perform power control based on path loss (PL). Since the first network device does not support downlink transmission, the terminal device may use the path loss of the second network device as a reference and obtain the path loss between the terminal device and the first network device by adding a path loss offset parameter to the path loss of the second network device. Therefore, the transmit power at which the terminal device transmits an uplink channel and/or an uplink signal is determined based on the path loss between the terminal device and the first network device.

In some embodiments, the path loss offset parameter is predefined or configured by the second network device, which is not limited in the embodiments of the present disclosure.

In some embodiments, the second network device may configure the path loss offset parameter for the terminal device according to functions implemented by the first network device and the second network device, or deployment of the first network device and the second network device. For example, if the second network device is an outdoor-deployed network device and the first network device is an indoor-deployed network device, the path loss offset parameter may be set to -10 dB. If the second network device is an indoor-deployed network device and the first network device is an outdoor-deployed network device, the path loss offset parameter may be set to 10 dB.

It should be noted that the terminal device may measure a downlink reference signal (referred to as the first downlink reference signal in the embodiments of the present disclosure) of the second network device, and may obtain the path loss of the second network device according to the transmit power of the first reference signal and the strength (such as RSRP) of the received signal.

It should be noted that the first downlink reference signal may be configured by the second network device (for example, configured by RRC signaling) or may be selected by the terminal device itself, which is not limited in the embodiments of the present disclosure. When the terminal device selects the first downlink reference signal, the terminal device may measure one or more downlink reference signals associated with the second network device, and select an appropriate downlink reference signal (for example, a downlink reference signal with the largest RSRP and/or a downlink reference signal with the largest SNR) as the first downlink reference signal according to the measurement result. The downlink reference signal associated with the terminal device may be an SSB or a CSI-RS, which is not limited in the embodiments of the present disclosure.

In an embodiment of the present disclosure, the power control of the terminal device may also be used in combination with power ramping.

In an embodiment of the present disclosure, if the terminal device does not receive the second information transmitted by the second network device within a first duration after the terminal device transmits the uplink channel and/or uplink signal, the terminal device adjusts the transmit power for the uplink channel and/or uplink signal, and transmits the uplink channel and/or uplink signal to the first network device using one or more spatial filters.

It is to be understood that when the terminal device transmits the uplink channel and/or uplink signal to the first network device according to the determined transmit power, and does not receive the TA indication from the second network device after waiting for a period of time (referred to as the first duration in the embodiments of the present disclosure), the terminal device may selectively retransmit the uplink channel and/or uplink signal to perform beam sweeping again, adjust the transmit power, and perform power ramping.

Exemplarily, if the transmit power of 17 dBm is used for the first time, the transmit power of 20 dBm may be used for the second time, with a step of 3 dB, until the upper limit of the transmit power of the terminal device is reached, or a TA indication from the second network device is received.

In practical application, as illustrated in FIG. 4, each TA value needs to be based on a downlink reference timing for performing timing advance. In an embodiment of the present disclosure, the downlink reference timing of the first TA value of the first network device may be determined based on the receiving time of the first reference signal, and the first downlink reference signal is any one of multiple downlink reference signals associated with the second network device.

Exemplarily, referring to the schematic diagram of the downlink reference timing of the first TA value illustrated in FIG. 7, the downlink frame i transmitted by the second network device may be a downlink frame where the first reference signal is located.

It should be noted that the first downlink reference signal may be configured by the second network device (for example, configured by RRC signaling) or may be selected by the terminal device itself, which is not limited in the embodiments of the present disclosure. When the terminal device selects the first downlink reference signal, the terminal device may measure one or more downlink reference signals associated with the second network device, and select an appropriate downlink reference signal (for example, a downlink reference signal with the largest RSRP and/or a downlink reference signal with the largest SNR) as the first downlink reference signal according to the measurement result. The downlink reference signal associated with the terminal device may be an SSB or a CSI-RS, which is not limited in the embodiments of the present disclosure.

In the communication method provided by the embodiments of the present disclosure, the terminal device may use one or more spatial filters to transmit at least one uplink channel and/or uplink signal to the first network device that does not support downlink transmission, and correspondingly, the first network device uses one or more spatial filters to receive the at least one uplink channel and/or uplink signal transmitted by the terminal device, so as to realize beam sweeping of the at least one uplink channel and/or uplink signal. As such, the first network device may determine the first TA value of the first network device using the uplink channel and/or uplink signal transmitted/received by the one or more spatial filters. In this way, the TA value acquisition method of the first network device that does not support downlink transmission is clarified, thereby ensuring the correct transmission of uplink data and improving the stability of the communication system.

The communication method provided by the embodiments of the present disclosure will be described below in detail in conjunction with the random access scenario.

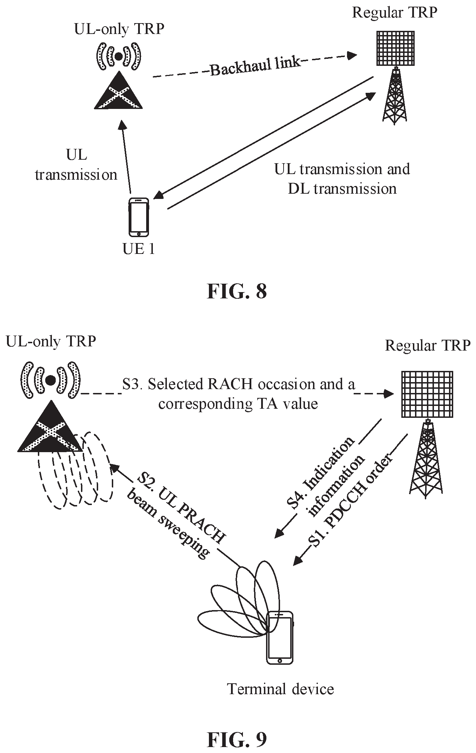

In this scenario, the first network device may be a UL-only TRP, and the second network device may be a regular TRP. Referring to the scenario diagram illustrated in FIG. 8, the UL-only TRP and the regular TRP may communicate through a backhaul link. The UL-only TRP only supports uplink transmission without any downlink transmission. The regular TRP supports at least downlink transmission, and in general, the regular TRP may perform uplink and downlink transmission simultaneously.

The regular TRP may transmit the downlink reference signal SSB, and the terminal device may acquire the TA value of the regular TRP based on the SSB transmitted by the regular TRP. It is to be understood that the SSB has two main purposes for TA acquisition of a regular TRP. First, the SSB may be used to calculate path loss for PRACH transmit power control, that is, SSB is used as a pathloss reference signal (PL RS). Second, the SSB may be used for downlink time synchronization, and the uplink TA value is based on the downlink reference timing. Further, the PRACH is also transmitted on the basis of the downlink frame, that is, the TA value of the PRACH is 0.

The serving cell in which the regular TRP is located is associated with a TAG. The TAG may be configured with one or more of the following: a TAG ID, an implicit downlink reference timing, a TA offset, and a TA value.

Based on different methods of triggering the terminal device to acquire TA, two embodiments may be divided, and the corresponding signaling flow will be described in detail below.

Embodiment 1: The terminal device performs TA acquisition of the UL-only TRP based on a PDCCH order. Referring to FIG. 9, TA acquisition of the UL-only TRP based on the PDCCH order includes the following operations.

In S1, the regular TRP transmits a PDCCH order (corresponding to the second information in the above embodiments) to the terminal device.

The PDCCH order indicates that the terminal device performs beam sweeping of the PRACH on different RACH occasions.

In the current NR technology, a network may transmit a PDCCH order to a terminal device through a regular TRP. The PDCCH order includes at least the following information: 1) a preamble sequence index of a random access, 2) an SSB index, and 3) a PRACH Mask index(es).

1) The preamble sequence index (Preamble index) of the random access is usually 6 bits.

It is to be understood that the PDCCH order indicates a contention-free random access procedure, which should use the preamble index that is not all 0, that is, a specific preamble is indicated to the terminal device.

2) The SSB index is usually 6 bits.

It is to be understood that the terminal device uses the SSB index to determine the RACH occasion to transmit the PRACH.

3) The PRACH Mask index is usually 4 bits.

It is to be understood that the PRACH Mask index is used to indicate one of multiple RACH occasions associated with the above SSB, that is, the terminal device may determine one occasion for transmitting the PRACH through the SSB index and the PRACH Mask index.

Since the SSB index is not from the UL-only TRP, the SSB cannot be used as a downlink reception reference timing (DL reference timing), nor can it be used as the PL RS to estimate the path loss to determine the power for transmitting the PRACH. Therefore, in the embodiment of the present disclosure, it is necessary to enhance the PDCCH order. At the stage when the terminal device accesses the UL-only TRP, the terminal device and the network cannot know in advance spatial filters directions of which have better uplink performance and their corresponding TA values. Therefore, in this embodiment, the regular TRP instructs the terminal device to perform beam sweeping of PRACH on different RACH occasions through the PDCCH order.

The PDCCH order transmitted by the regular TRP to the terminal device in S1 may be an enhanced PDCCH order. Unlike the PDCCH order transmitted by the regular TRP described above, the PDCCH order may include the following contents:

1) Preamble index
2) SSB index

The SSB indicated by the SSB index is from the regular TRP. The reception time of the SSB indicated by the enhanced PDCCH order may be used as the downlink reference timing of the UL-only TRP.

3) RACH occasion

In one possible implementation, the RACH occasion may be a RACH occasion used by the terminal device to perform PRACH beam sweeping.

In another possible implementation, the RACH occasion may be a PRACH Mask index(es).

The PRACH Mask index(es) refers to one or more RACH occasions associated with the indicated SSB index. It is to be noted that the indicated SSB is from the regular TRP, and the associated RACH occasion is also an uplink time-frequency resource of the TRP, which is lent to the UL-only TRP for use.

4) Uplink power control information

In one possible implementation, since the UL-only TRP has no downlink reference signal, the terminal device cannot calculate the path loss of the UL-only TRP based on the SSB transmitted by the regular TRP. Therefore, a preconfigured or pre-defined transmit power is considered. The terminal device may preconfigure or predefine one or more transmit powers for the PRACH, and the regular TRP may indicate one of the transmit powers in the enhanced PDCCH order for transmitting the PRACH.

For example, the transmit powers of the PRACH may be preconfigured or predefined as 23 dBm, 20 dBm, 17 dBm, 14 dBm, and the regular TRP may use 2 bits to indicate one of the transmit powers for transmitting the PRACH.

It should be noted that if the preconfigured or predefined transmit power has only one value, the terminal device may transmit the PRACH using the preconfigured transmit power without additional indication from the regular TRP.

It should also be noted that the enhanced PDCCH order may not indicate the uplink power control information. The terminal device may obtain the path loss of the UL-only TRP based on the path loss offset parameter and the path loss of the regular TRP, and perform power control based on the path loss. Specifically, the terminal device may measure the downlink reference signal of the regular TRP, and obtain the path loss of the regular TRP according to the transmit power of the reference signal and the strength (such as RSRP) of the received signal.

Exemplarily, if the path loss of the regular TRP is 50 dB, since the UL-only TRP is close to the terminal device, the preconfigured path loss offset parameter may be -10 dB, that is, the path loss of the UL-only TRP is 40 dB.

In addition to the above information, the enhanced PDCCH order may include uplink/supplementary uplink indication information (UL/SUL indicator), reserved bits, and the like.

In S2, the terminal device performs PRACH beam sweeping in multiple RACH occasions.

The multiple RACH occasions may be indicated by the enhanced PDCCH order in S1.

The terminal device performs PRACH beam sweeping in different RACH occasions, which may refer to the following.

The terminal device performs the PRACH uplink transmit beam sweeping using different spatial transmission filters in different RACH occasions, or the terminal device performs the PRACH uplink receive beam sweeping using the same spatial transmission filter in different RACH occasions, or the PRACH beam sweeping performed using the same or different spatial transmission filters in different RACH occasions may be an implementation behavior of the terminal device.

Correspondingly, the UL-only TRP may receive the PRACH transmitted by the terminal device in multiple RACH occasions, which specifically includes the following. If the terminal device performs the PRACH uplink transmit beam sweeping using different spatial transmission filters in different RACH occasions, the UL-only TRP may receive the PRACH using the same spatial reception filter. If the terminal device performs the PRACH uplink receive beam sweeping using the same spatial transmission filter in different RACH occasions, the UL-only TRP may receive the PRACH using different spatial reception filters. The UL-only TRP may also implement a spatial reception filter by itself to receive the PRACH.

In S3, the UL-only TRP selects a RACH occasion, determines a corresponding TA value, and transmits the selected RACH occasion and the corresponding TA value to the regular TRP.

It is to be understood that, the UL-only TRP measures the PRACH in one or more RACH occasions, selects the most suitable RACH occasion (e.g., selecting the RACH occasion with the highest receiving power of PRACH/the RACH occasion with the largest SNR/the RACH occasion with the smallest TA value) and the corresponding TA value. The selected RACH occasion is associated with the spatial transmission filter of the terminal device because the terminal device knows which spatial transmission filter is used in the selected RACH occasion. The RACH occasion may be used as beam indication between the UL-only TRP and the terminal device.

In S4, the regular TRP transmits indication information (corresponding to the second information in the above embodiments) to the terminal device, indicating the RACH occasion selected by the UL-only TRP and the corresponding TA value.

In one possible implementation, the regular TRP is associated with the UL-only TRP, the regular TRP and the UL-only TRP belong to the same TAG. That is, independent TA value indication of the UL-only TRP is not supported, and the TA value indication of the UL-only TRP needs to depend on the TA value of the regular TRP.

In an example, the indication information may indicate multiple TA offsets for the TAG. Different TA offsets are associated with different TRPs. The TA value of the UL-only TRP may be determined according to the associated TA offset and the reference TA value.

In another example, the indication information may directly indicate a TA value of the regular TRP and a difference value of the TA value of the UL-only TRP with respect to the TA value of the regular TRP. The TA value of the UL-only TRP may be determined according to the difference value and the TA value of the UL-only TRP.

In another example, the indication information may indicate a first difference value for the UL-only TRP and a second difference value for the regular TRP. The first difference value is a difference value between the new UL-only TRP TA value and the old UL-only TRP TA value. The second difference value is a difference value between the new regular TRP TA value and the old regular TRP TA value.

In another possible implementation, the regular TRP and the UL-only TRP belong to different TAGs, and the regular TRP may independently configure a corresponding TA value for the UL-only TRP. Exemplarily, the indication information may configure one or more of the following for the TAG in which the UL-only TRP is located: a TAG ID, a TA offset, and a TA value. Compared with the TAG of the regular TRP, the UL-only TRP has no independent downlink reference timing, and the TA value of the UL-only TRP is timing advance based on the downlink reference timing of the regular TRP.

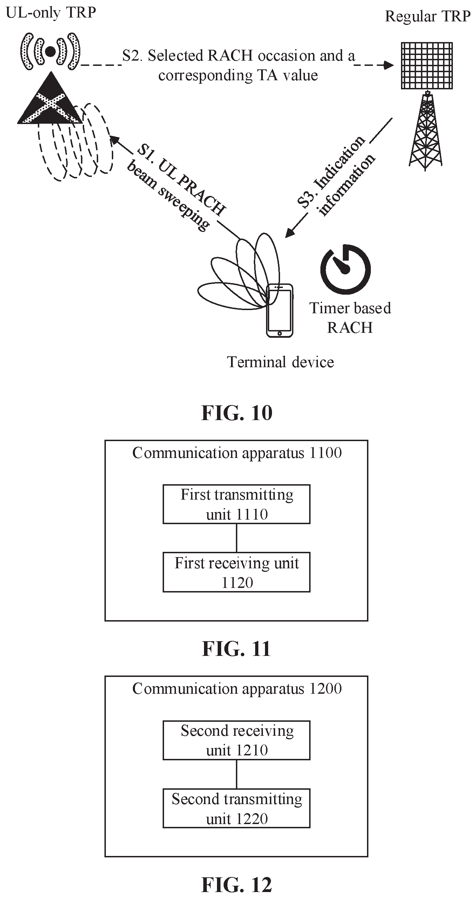

Embodiment 2: The terminal device performs TA acquisition of the UL-only TRP based on a TA timer. Referring to FIG. 10, TA acquisition of the UL-only TRP based on the TA timer includes the following operations.

In S1, the TA timer expires, and the terminal device performs PRACH beam sweeping in multiple RACH occasions.

Since the operation that the terminal device performs PRACH beam sweeping in multiple RACH occasions is triggered by the timeout of the TA timer, the related resources used by the terminal device to perform PRACH beam sweeping, for example, the preamble used by the terminal device to perform PRACH beam sweeping, may be selected by the terminal device.

It should be noted that the RACH procedure triggered by the TA timer is a contention based procedure, and the terminal device may select the preamble for transmitting the PRACH by itself. The PRACH may conflict with a PRACH of other terminal devices, and the contention resolution mechanism in the RACH procedure may be used to determine whether the response from the network side is directed to the terminal device.

In one possible implementation, multiple RACH occasions in which the terminal device performs PRACH beam sweeping may be selected by the terminal device itself. Specifically, the terminal device may measure SSBs of the regular TRP and select an appropriate SSB (e.g., the SSB with the largest RSRP/the largest SNR). The terminal device performs PRACH beam sweeping according to one or more RACH occasions associated with the selected SSB.

It is to be noted that the SSB of the regular TRP selected by the terminal device may also be used as a reference for the downlink reference timing and/or the path loss. The terminal device may perform power control based on the path loss, and the specific method may refer to the description in the above embodiments, which will not be repeated here for the sake of brevity.

In another possible implementation, multiple RACH occasions in which the terminal device performs PRACH beam sweeping may also be configured by the regular TRP. In an example, the regular TRP may configure a RACH occasion for the UL-only TRP for the terminal device. In another example, the regular TRP may specify an SSB for the UL-only TRP for the terminal device, and correspondingly, multiple RACH occasions in which the terminal device performs PRACH beam sweeping may be one or more RACH occasions associated with the specified SSB.

In S2, the UL-only TRP selects a RACH occasion, determines a corresponding TA value, and transmits the selected RACH occasion and the corresponding TA value to the regular TRP.

The description on that the UL-only TRP selects the RACH occasion and determines the corresponding TA value may refer to the above embodiments, which will not be repeated here for the sake of brevity.

In S3, the regular TRP transmits indication information (corresponding to the second information in the above embodiments) to the terminal device, indicating the RACH occasion selected by the UL-only TRP and the corresponding TA value.

The description on that the regular TRP transmits the indication information to the terminal device may refer to the above embodiments, which will not be repeated here for the sake of brevity.

The terminal device can obtain the TA value of the UL-only TRP through the beam sweeping process of RACH, such that the method for acquiring the TA value of the UL-only TRP is clarified, thereby ensuring the correct transmission of uplink data and improving the stability of the communication system.

The preferred embodiments of the present disclosure have been described in detail with reference to the accompanying drawings, but the present disclosure is not limited to the specific details of the above embodiments. Within the scope of the technical conception of the present disclosure, various simple modifications may be made to the technical solutions of the present disclosure, and these simple modifications all fall within the scope of protection of the present disclosure. For example, specific technical features described in the above specific embodiments may be combined in any suitable manner without contradiction, and various possible combinations are not further described in the present disclosure in order to avoid unnecessary repetition. For another example, various different implementations of the present disclosure may be combined arbitrarily as long as the combination does not depart from the idea of the present disclosure, and the combination should be regarded as the contents of the present disclosure. For another example, various embodiments and/or the technical features of the various embodiments in the present disclosure may be combined with the related art in any manner without conflict, and the resulting technical solutions shall also fall within the scope of protection of the present disclosure.

It is to be understood that, in various method embodiments of the present disclosure, a magnitude of a sequence number of each process does not mean an execution sequence and the execution sequence of each process should be determined by its function and an internal logic and should not form any limit to an implementation process of the embodiments of the present disclosure.

Based on the same inventive concept as the above embodiments, FIG. 11 illustrates a schematic structural diagram of a communication apparatus 1100 according to an embodiment of the present disclosure, which is applied to a terminal device. As illustrated in FIG. 11, the communication apparatus 1100 may include a first transmitting unit 1110 and a first receiving unit 1120.

The first transmitting unit 1110 is configured to transmit at least one uplink channel and/or uplink signal to a first network device using one or more spatial filters. The first network device is a network device that does not support downlink transmission. The at least one uplink channel and/or uplink signal transmitted using the one or more spatial filters is used by the first network device to determine a first TA value of the first network device.

The first receiving unit 1120 is configured to receive first information transmitted by a second network device. The first information indicates the first TA value, and the first TA value is used for the terminal device to perform uplink transmission with the first network device.

In some embodiments, the at least one uplink channel and/or uplink signal transmitted using the one or more spatial filters is associated with one or more transmission resources.

In some embodiments, the at least one uplink channel and/or uplink signal transmitted using the one or more spatial filters being associated with the one or more transmission resources include one or more of the following.

Uplink channels and/or uplink signals transmitted by multiple spatial filters are associated with multiple transmission resources, and different spatial filters are associated with different transmission resources.

Uplink channels and/or uplink signals transmitted by multiple spatial filters are associated with a transmission resource.

Uplink channels and/or uplink signals transmitted by a spatial filter are associated with multiple transmission resources.

In some embodiments, the transmission resource includes one or more of: a transmission occasion, and a preamble sequence.

In some embodiments, the first transmitting unit 1110 is configured to perform one or more of the following: transmitting uplink channels and/or uplink signals to the first network device using multiple spatial filters in one transmission occasion, the uplink channels and/or uplink signals transmitted by the plurality of spatial filters being associated with multiple preamble sequences; transmitting an uplink channel and/or an uplink signal to the first network device using one spatial filter in one transmission occasion; transmitting uplink channels and/or uplink signals to the first network device using different spatial filters in multiple transmission occasions; and transmitting uplink channels and/or uplink signals to the first network device using the same spatial filter in multiple transmission occasions.

In some embodiments, the first receiving unit 1120 is further configured to receive second information transmitted by the second network device. The second information triggers the terminal device to transmit the at least one uplink channel and/or uplink signal.

In some embodiments, the second information is further used to indicate one or more transmission resources, and the at least one uplink channel and/or uplink signal transmitted by the one or more spatial filters is associated with the one or more transmission resources.

In some embodiments, the transmission resource includes a transmission occasion. The transmission occasion is a transmission occasion associated with a first downlink reference signal, and the first downlink reference signal is any one of multiple downlink reference signals transmitted by the second network device.

In some embodiments, the second information is a PDCCH command.

In some embodiments, the communication apparatus 1100 further includes a determination unit. The determination unit is configured to determine that a TA timer expires. The TA timer is used to trigger the terminal device to transmit the at least one uplink channel and/or uplink signal.

In some embodiments, the determination unit is further configured to determine one or more transmission resources with which the at least one uplink channel and/or uplink signal transmitted by the one or more spatial filters is associated.

In some embodiments, the one or more transmission resources are configured by the second network device or selected by the terminal device from candidate transmission resources.

In some embodiments, the transmission resource includes a transmission occasion.

The transmission occasion is a transmission occasion associated with a first downlink reference signal, and the first downlink reference signal is any one of multiple downlink reference signals transmitted by the second network device.

In some embodiments, the first network device and the second network device belong to the same TAG, and the first information includes: a reference TA value; a first TA offset associated with the first network device; and a second TA offset associated with the second network device. The first TA value of the first network device is determined based on the reference TA value and the first TA offset.

In some embodiments, the first network device and the second network device belong to the same TAG, and the first information includes: a second TA value of the second network device; and a first difference value associated with the first network device.

The first TA value of the first network device is determined based on the second TA value and the first difference value.

In some embodiments, the first network device and the second network device belong to the same TAG, and the first information includes: a first difference value associated with the first network device; and a second difference value associated with the second network device. The first TA value is determined based on the first difference value and a historical TA value of the first network device.

In some embodiments, the first network device and the second network device belong to different TAGs, and the first information includes: a reference TA value; and a first TA offset associated with the first network device. The first TA value is determined based on the reference TA value and the first TA offset, and a downlink reference timing of the first TA value is the same as a downlink reference timing of a second TA value of the second network device.

In some embodiments, the at least one uplink channel and/or uplink signal transmitted using the one or more spatial filters is associated with one or more transmission resources.

The first information further indicates a first transmission resource, the first TA value is determined based on a measurement result of an uplink channel and/or an uplink signal associated with the first transmission resource, and the one or more transmission resources include the first transmission resource.

In some embodiments, a transmit power of the terminal device for transmitting the at least one uplink channel and/or uplink signal is configured by the second network device, or determined based on a path loss and a path loss offset parameter of the second network device.

The path loss of the second network device is determined based on a first downlink reference signal, the first downlink reference signal is any one of multiple downlink reference signals associated with the second network device, and the path loss offset parameter is predefined or configured by the second network device.

In some embodiments, the first transmitting unit 1110 is further configured to adjust, if the second information transmitted by the second network device is not received within a first duration after transmitting the at least one uplink channel and/or uplink signal, the transmit power for transmitting the at least one uplink channel and/or uplink signal, and transmit an uplink channel and/or uplink signal to the first network device using the one or more spatial filters.

In some embodiments, a downlink reference timing of the first TA value of the first network device is determined based on a reception time of a first reference signal, and the first downlink reference signal is any one of multiple downlink reference signals associated with the second network device.

In some embodiments, the first downlink reference signal is configured by the second network device or selected by the terminal device.

Based on the same inventive concept as the above embodiments, FIG. 12 illustrates a schematic structural diagram of a communication apparatus 1200 according to an embodiment of the present disclosure, which is applied to a first network device that does not support downlink transmission. As illustrated in FIG. 12, the communication apparatus 1200 may include a second receiving unit 1210 and a second transmitting unit 1220.

The second receiving unit 1210 is configured to receive at least one uplink channel and/or uplink signal transmitted by a terminal device using one or more spatial filters. The at least one uplink channel and/or uplink signal received using the one or more spatial filters are used to determine a first TA value of the first network device.

The second transmitting unit 1220 is configured to transmit first information to the terminal device through a second network device. The first information indicates the first TA value, the second network device is a network device that supports downlink transmission, and the first TA value is used for the terminal device to perform uplink transmission with the first network device.

In some embodiments, the at least one uplink channel and/or uplink signal received using the one or more spatial filters is associated with one or more transmission resources.

The first TA value is determined by the first network device based on a measurement result of an uplink channel and/or an uplink signal associated with a first transmission resource.

The first transmission resource is a transmission resource among the one or more transmission resources that is associated with an uplink channel and/or uplink signal satisfying a first condition.

In some embodiments, the first condition includes one or more of: a transmission resource associated with an uplink channel and/or uplink signal having the highest receiving power among the one or more transmission resources; a transmission resource associated with an uplink channel and/or uplink signal having the largest SNR among the one or more transmission resources; and a transmission resource associated with an uplink channel and/or uplink signal having the smallest TA value among the one or more transmission resources.

In some embodiments, the at least one uplink channel and/or uplink signal received using the one or more spatial filters being associated with one or more transmission resources includes one or more of: uplink channels and/or uplink signals received by multiple spatial filters are associated with multiple transmission resources, different spatial filters being associated with different transmission resources; uplink channels and/or uplink signals received by multiple spatial filters are associated with one transmission resource; and uplink channels and/or uplink signals received by one spatial filter are associated with multiple transmission resources.

In some embodiments, the transmission resource includes one or more of: a transmission occasion, and a preamble sequence.

In some embodiments, the second receiving unit 1210 is further configured to perform one or more of the following: receiving uplink channels and/or uplink signals transmitted by the terminal device using multiple spatial filters in one transmission occasion, the uplink channels and/or uplink signals received by the multiple spatial filters are associated with a plurality of preamble sequences; receiving an uplink channel and/or an uplink signal transmitted by the terminal device using one spatial filter in one transmission occasion; receiving uplink channels and/or uplink signals transmitted by the terminal device using different spatial filters in multiple transmission occasions; and receiving uplink channels and/or uplink signals transmitted by the terminal device using the same spatial filter in multiple transmission occasions.

In some embodiments, the second transmitting unit 1220 is further configured to transmit third information to a second network device. The third information triggers the second network device to transmit the first information to the terminal device, and the third information is used to indicate the first TA value.

In some embodiments, the third information is further used to indicate a first transmission resource corresponding to the first TA value, the first TA value is determined based on a measurement result of an uplink channel and/or an uplink signal associated with the first transmission resource, and the one or more transmission resources include the first transmission resource.

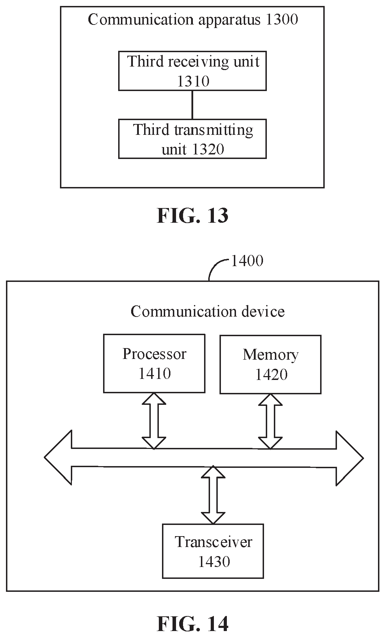

Based on the same inventive concept as the foregoing embodiments, FIG. 13 illustrates a schematic structural diagram of a communication apparatus 1300 according to an embodiment of the present disclosure, which is applied to a second network device that supports downlink transmission. As illustrated in FIG. 13, the communication apparatus 1300 may include a third receiving unit 1310 and a third transmitting unit 1320.

The third receiving unit 1310 is configured to receive third information transmitted by a first network device. The third information is used to indicate a first TA value of the first network device, and the first network device is a network device that does not support downlink transmission.

The third transmission unit 1320 is configured to transmit first information to a terminal device. The first information is used to indicate the first TA value, and the first TA value is used for the terminal device to perform uplink transmission with the first network device.

In some embodiments, the first network device and the second network device belong to the same TAG, and the first information includes: a reference TA value; a first TA offset associated with the first network device; and a second TA offset associated with the second network device.

The first TA value of the first network device is determined based on the reference TA value and the first TA offset.

In some embodiments, the first network device and the second network device belong to the same TAG, and the first information includes: a second TA value of the second network device; and a first difference value associated with the first network device.

The first TA value of the first network device is determined based on the second TA value and the first difference value.

In some embodiments, the first network device and the second network device belong to the same TAG, and the first information includes: a first difference value associated with the first network device; and a second difference value associated with the second network device.

The first TA value is determined based on the first difference value and a historical TA value of the first network device.

In some embodiments, the first network device and the second network device belong to different TAGs, and the first information includes: a reference TA value; and a first TA offset associated with the first network device.

The first TA value is determined based on the reference TA value and the first TA offset, and the downlink reference timing of the first TA value is the same as the downlink reference timing of the second TA value of the second network device.

In some embodiments, the first information and the third information are further used to indicate a first transmission resource, and the first TA value is determined based on a measurement of an uplink channel and/or an uplink signal associated with the first transmission resource.

In some embodiments, the third transmitting unit 1320 is further configured to transmit second information to the terminal device. The second information is used for triggering the terminal device to transmit an uplink channel(s) and/or an uplink signal(s).

In some embodiments, the second information is further used for indicating one or more transmission resources. The one or more transmission resources are associated with at least one uplink channel and/or uplink signal transmitted by the terminal device to the first network device using one or more spatial filters.

In some embodiments, the transmission resource includes one or more of: a transmission occasion, and a preamble sequence.

In some embodiments, the transmission occasion is a transmission occasion associated with a first downlink reference signal, and the first downlink reference signal is any one of multiple downlink reference signals transmitted by the second network device.

In some embodiments, the second information is a PDCCH order.

Those skilled in the art will appreciate that the above relevant description of the communication apparatus in the embodiments of the present disclosure may be understood with reference to the relevant description of the communication method in the embodiments of the present disclosure.

FIG. 14 is a schematic structural diagram of a communication device 1400 according to an embodiment of the present disclosure. As illustrated in FIG. 14, the communication device 1400 includes a processor 1410 and a memory 1420. The memory 1420 may store a computer program, and the processor 1410 may call and run the computer program from the memory 1420 to implement the method in the embodiments of the present disclosure.

The memory 1420 may be a separate device independent of the processor 1410 or may be integrated into the processor 1410.

In some embodiments, as illustrated in FIG. 14, the communication device 1400 may further include a transceiver 1430. The processor 1410 may control the transceiver 1430 to communicate with other devices, in particular, to send information or data to other devices, or receive information or data sent by other devices.

The transceiver 1430 may include a transmitter and a receiver. The transceiver 1430 may further include an antenna(s), the number of which may be one or more.

In some embodiments, the embodiments of the present disclosure further provide a composition of another communication device. The communication device may include the communication apparatus 1100, or the communication apparatus 1200, or the communication apparatus 1300 described in any one of the foregoing embodiments.

In some embodiments, the communication device may be the terminal device in the embodiments of the present disclosure. The processor 1410 may call and run the computer program from the memory 1420 to implement the method implemented by the terminal device in the embodiments of the present disclosure, which will not be repeated for the sake of brevity.

In some embodiments, the communication device may be a network device in the embodiment of the present disclosure. The processor 1410 may call and run the computer program from the memory 1420 to implement the method implemented by the network device in the embodiments of the present disclosure, which will not be repeated for the sake of brevity.

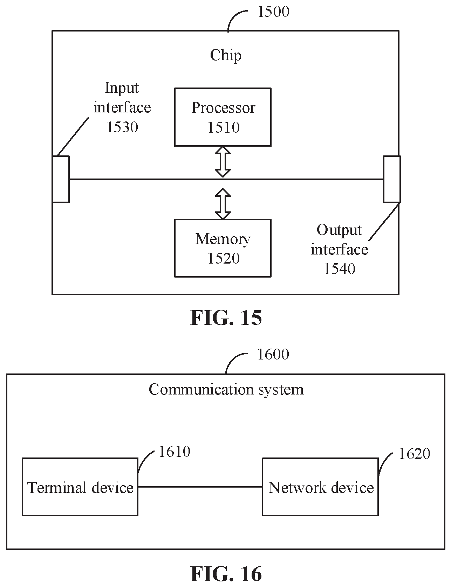

FIG. 15 is a schematic structural diagram of a chip according to an embodiment of the present disclosure. As illustrated in FIG. 15, the chip 1500 includes a processor 1510, and the processor 1510 may invoke and run a computer program from a memory to implement the method in the embodiments of the present disclosure.

In some embodiments, as illustrated in FIG. 15, the chip 1500 may further include a memory 1520. The processor 1510 may invoke and run a computer program from the memory 1520 to implement the method in the embodiments of the present disclosure.

The memory 1520 may be a separate device independent of the processor 1510, or may be integrated into the processor 1510.

In some embodiments, the chip 1500 may further include an input interface 1530. The processor 1510 may control the input interface 1530 to communicate with other devices or chips, and in particular may obtain information or data sent by other devices or chips.

In some embodiments, the chip 1500 may further include an output interface 1540. The processor 1510 may control the output interface 1540 to communicate with other devices or chips, and in particular may output information or data to other devices or chips.

In some embodiments, the chip may be applied to the network device in the embodiments of the present disclosure, which will not be repeated here for the sake of brevity.

In some embodiments, the chip may be applied to the terminal device in the embodiments of the present disclosure, which will not be repeated here for the sake of brevity.

It is to be understood that the chip mentioned in the embodiments of the present disclosure may also be referred to as a system-level chip, a system chip, a chip system, or a System on Chip (SOC) chip, etc.

FIG. 16 is a schematic block diagram of a communication system 1600 according to an embodiment of the present disclosure. As illustrated in FIG. 16, the communication system 1600 may include a terminal device 1610 and a network device 1620.

The terminal device 1610 may be used to implement the corresponding functions implemented by the terminal device in the above method, and the network device 1620 may be used to implement the corresponding functions implemented by the network device in the above method, which will not be repeated here for the sake of brevity.

It should be understood that the processor in the embodiments of the present disclosure may be an integrated circuit chip with a signal processing capability. During implementation, each operation of the above method embodiments may be completed by an integrated logic circuit of hardware in the processor or an instruction in form of software. The processor may be a general-purpose processor, a Digital Signal Processor (DSP), an Application Specific Integrated Circuit (ASIC), a Field Programmable Gate Array (FPGA), or another programmable logical device, discrete gate or transistor logical device and discrete hardware component. Each method, operation and logical block diagram disclosed in the embodiments of the present disclosure may be implemented or executed. The general-purpose processor may be a microprocessor or the processor may also be any conventional processor and the like. The operations of the method disclosed in combination with the embodiments of the present disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or an electrically erasable programmable memory, and a register. The storage medium is located in a memory, and the processor reads information in the memory, and completes operations of the above methods in combination with hardware thereof.

It is to be understood that the memory in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory described in the present disclosure is intended to include, but not limited to, memories of these and any other proper types.

It is to be understood that the above memory is exemplarily but unlimitedly described. For example, the memory in the embodiments of the present disclosure may also be an SRAM, a DRAM, an SDRAM, a DDR SDRAM, an ESDRAM, an SLDRAM and a DR RAM. That is, the memory in the embodiments of the present disclosure is intended to include but not limited to memories of these and any other proper types.

The embodiments of the present disclosure further provide a computer-readable storage medium, which is configured to store a computer program.

In some embodiments, the computer-readable storage medium may be applied to the terminal device in the embodiments of the present disclosure, and the computer program, when executed by at least one processor, implements corresponding flows implemented by the terminal device in each method of the embodiments of the disclosure, which will not be repeated here for the sake of brevity.

In some embodiments, the computer-readable storage medium may be applied to the network device in the embodiments of the present disclosure, and the computer program, when executed by at least one processor, implements corresponding flows implemented by the network device in each method of the embodiments of the disclosure, which will not be repeated here for the sake of brevity.

The embodiments of the present disclosure further provide a computer program product, which includes computer program instructions.

In some embodiments, the computer program product may be applied to the terminal device in the embodiments of the present disclosure, and the computer program instructions enable a computer to execute corresponding flows implemented by the terminal device in each method of the embodiments of the present disclosure, which will not be repeated here for the sake of brevity.

In some embodiments, the computer program product may be applied to the network device in the embodiments of the present disclosure, and the computer program instructions enable a computer to execute corresponding flows implemented by the network device in each method of the embodiments of the present disclosure, which will not be repeated here for the sake of brevity.

The embodiments of the present disclosure further provide a computer program.

In some embodiments, the computer program may be applied to the terminal device in the embodiments of the present disclosure. The computer program, when run on a computer, enables the computer to execute corresponding flows implemented by the terminal device in each method of the embodiments of the present disclosure, which will not be repeated here for the sake of brevity.

In some embodiments, the computer program may be applied to the network device in the embodiments of the present disclosure. The computer program, when run on a computer, enables the computer to execute corresponding flows implemented by the network device in each method of the embodiments of the present disclosure, which will not be repeated here for the sake of brevity.

Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific working processes of the apparatus and unit described above may refer to the corresponding processes in the method embodiments and will not be elaborated herein for convenient and brief description.

In some embodiments provided by the present disclosure, it is to be understood that the disclosed apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the apparatus or the units, and may be electrical, mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

It is to be noted that, in the present disclosure, terms "include" and "contain" or any other variant thereof are intended to cover nonexclusive inclusions, so that a process, method, object or apparatus including a series of elements not only includes these elements but also includes other elements which are not clearly listed or further includes elements intrinsic to the process, the method, the object or the apparatus. Under the condition of no more limitations, an element defined by the statement "including a/an......" does not exclude existence of the same other elements in a process, method, object or device including the element.

The sequence numbers of the embodiments of the present disclosure are adopted not to represent superiority and inferiority of the embodiments but only for description.

The methods disclosed in some method embodiments provided in the present disclosure may be freely combined without conflicts to obtain new method embodiments.

The characteristics disclosed in some product embodiments provided in the present disclosure may be freely combined without conflicts to obtain new product embodiments.

The characteristics disclosed in some method or device embodiments provided in the present disclosure may be freely combined without conflicts to obtain new method embodiments or device embodiments.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A communication method, comprising:

   transmitting, by a terminal device, at least one uplink channel and/or uplink signal to a first network device using one or more spatial filters, wherein the first network device is a network device that does not support downlink transmission, and the at least one uplink channel and/or uplink signal transmitted using the one or more spatial filters is used by the first network device to determine a first timing advance, TA, value of the first network device; and
   receiving, by the terminal device, first information from a second network device, wherein the first information indicates the first TA value, and the first TA value is used for the terminal device to perform uplink transmission with the first network device.

2. The method of claim 1, wherein the at least one uplink channel and/or uplink signal transmitted using the one or more spatial filters is associated with one or more transmission resources.

3. The method of claim 2, wherein the at least one uplink channel and/or uplink signal transmitted using the one or more spatial filters being associated with the one or more transmission resources comprises one or more of:

   uplink channels and/or uplink signals transmitted by a plurality of spatial filters are associated with a plurality of transmission resources, wherein different spatial filters are associated with different transmission resources;
   uplink channels and/or uplink signals transmitted by the plurality of spatial filters are associated with a transmission resource; and
   uplink channels and/or uplink signals transmitted by a spatial filter are associated with a plurality of transmission resources.

4. The method of claim 2 or 3, wherein the transmission resource comprises one or more of: a transmission occasion, and a preamble sequence.

5. The method of any one of claims 1-4, wherein transmitting, by the terminal device, the at least one uplink channel and/or uplink signal to the first network device using the one or more spatial filters, comprises one or more of:

transmitting, by the terminal device, uplink channels and/or uplink signals to the first network device using a plurality of spatial filters in one transmission occasion, wherein the uplink channels and/or uplink signals transmitted by the plurality of spatial filters are associated with a plurality of preamble sequences;
transmitting, by the terminal device, an uplink channel and/or an uplink signal to the first network device using one spatial filter in one transmission occasion;
transmitting, by the terminal device, uplink channels and/or uplink signals to the first network device using different spatial filters in a plurality of transmission occasions; and
transmitting, by the terminal device, uplink channels and/or uplink signals to the first network device using the same spatial filter in the plurality of transmission occasions.

6. The method of any one of claims 1-5, wherein before the terminal device transmits the at least one uplink channel and/or uplink signal to the first network device using the one or more spatial filters, the method further comprises:
receiving, by the terminal device, second information transmitted by the second network device, wherein the second information triggers the terminal device to transmit the at least one uplink channel and/or uplink signal.

7. The method of claim 6, wherein the second information is further used to indicate one or more transmission resources, and the at least one uplink channel and/or uplink signal transmitted by the one or more spatial filters is associated with the one or more transmission resources.

8. The method of claim 7, wherein the transmission resource comprises a transmission occasion, the transmission occasion is a transmission occasion associated with a first downlink reference signal, and the first downlink reference signal is any one of a plurality of downlink reference signals transmitted by the second network device.

9. The method of any one of claims 6-8, wherein the second information is a physical downlink control channel, PDCCH, order.

10. The method of any one of claims 1-5, wherein before the terminal device transmits the at least one uplink channel and/or uplink signal to the first network device using the one or more spatial filters, the method comprises:
determining, by the terminal device, that a TA timer expires, wherein the TA timer is used to trigger the terminal device to transmit the at least one uplink channel and/or uplink signal.

11. The method of claim 10, further comprising:
determining, by the terminal device, one or more transmission resources, wherein the at least one uplink channel and/or uplink signal transmitted by the one or more spatial filters is associated with the one or more transmission resources.

12. The method of claim 11, wherein the one or more transmission resources are configured by the second network device, or selected by the terminal device from candidate transmission resources.

13. The method of claim 11 or 12, wherein the transmission resource comprises a transmission occasion; the transmission occasion is a transmission occasion associated with a first downlink reference signal, and the first downlink reference signal is any one of a plurality of downlink reference signals transmitted by the second network device.

14. The method of any one of claims 1-13, wherein the first network device and the second network device belong to the same timing advance group, TAG, and the first information comprises:

a reference TA value;
a first TA offset associated with the first network device; and
a second TA offset associated with the second network device;
wherein the first TA value of the first network device is determined based on the reference TA value and the first TA offset.

15. The method of any one of claims 1-13, wherein the first network device and the second network device belong to the same TAG, and the first information comprises:

a second TA value of the second network device; and
a first difference value associated with the first network device;
wherein the first TA value of the first network device is determined based on the second TA value and the first difference value.

16. The method of any one of claims 1-13, wherein the first network device and the second network device belong to the same TAG, and the first information comprises:

a first difference value associated with the first network device; and

a second difference value associated with the second network device;

wherein the first TA value is determined based on the first difference value and a historical TA value of the first network device.

17. The method of any one of claims 1-13, wherein the first network device and the second network device belong to different TAGs, and the first information comprises:

a reference TA value; and

a first TA offset associated with the first network device;

wherein the first TA value is determined based on the reference TA value and the first TA offset, and a downlink reference timing of the first TA value is the same as that of a second TA value of the second network device.

18. The method of any one of claims 1-13, wherein the at least one uplink channel and/or uplink signal transmitted using the one or more spatial filters is associated with one or more transmission resources; the first information is further used to indicate a first transmission resource, the first TA value is determined based on a measurement result of an uplink channel and/or an uplink signal associated with the first transmission resource, and the one or more transmission resources comprise the first transmission resource.

19. The method of any one of claims 1-18, wherein a transmit power of the terminal device for transmitting the at least one uplink channel and/or uplink signal is configured by the second network device, or determined based on a path loss and a path loss offset parameter of the second network device; wherein the path loss of the second network device is determined based on a first downlink reference signal, the first downlink reference signal is any one of a plurality of downlink reference signals associated with the second network device, and the path loss offset parameter is predefined or configured by the second network device.

20. The method of any one of claims 1-19, further comprising:

adjusting, by the terminal device if the terminal device does not receive the first information transmitted by the second network device within a first duration after the terminal device transmits the at least one uplink channel and/or uplink signal, a transmit power for transmitting the at least one uplink channel and/or uplink signal, and transmitting an uplink channel and/or uplink signal to the first network device using the one or more spatial filters.

21. The method of any one of claims 1-20, wherein a downlink reference timing of the first TA value is determined based on a reception time of a first reference signal, and the first downlink reference signal is any one of a plurality of downlink reference signals associated with the second network device.

22. The method of claim 8, 13, 19, or 21, wherein the first downlink reference signal is configured by the second network device, or selected by the terminal device.

23. A communication method, comprising:

receiving, by a first network device, at least one uplink channel and/or uplink signal transmitted by a terminal device using one or more spatial filters, wherein the first network device is a network device that does not support downlink transmission, and the at least one uplink channel and/or uplink signal received using the one or more spatial filters are used to determine a first timing advance, TA, value of the first network device;

transmitting, by the first network device, first information to the terminal device through a second network device, wherein the first information indicates the first TA value, the second network device is a network device supporting downlink transmission, and the first TA value is used for the terminal device to perform uplink transmission with the first network device.

24. The method of claim 23, wherein the at least one uplink channel and/or uplink signal received using the one or more spatial filters is associated with one or more transmission resources; the first TA value is determined by the first network device based on a measurement result of an uplink channel and/or an uplink signal associated with a first transmission resource; the first transmission resource is a transmission resource associated with an uplink channel and/or uplink signal satisfying a first condition among the one or more transmission resources.

25. The method of claim 24, wherein the first condition comprises one or more of:

a transmission resource associated with an uplink channel and/or uplink signal having the highest receiving power among the one or more transmission resources;

a transmission resource associated with an uplink channel and/or uplink signal having the largest signal-to-noise ratio, SNR, among the one or more transmission resources; and
a transmission resource associated with an uplink channel and/or uplink signal having the smallest TA value among the one or more transmission resources.

26. The method of claim 24 or 25, wherein the at least one uplink channel and/or uplink signal received using the one or more spatial filters being associated with one or more transmission resources comprises one or more of:

uplink channels and/or uplink signals received by a plurality of spatial filters are associated with a plurality of transmission resources, wherein different spatial filters are associated with different transmission resources;
uplink channels and/or uplink signals received by the plurality of spatial filters are associated with a transmission resource; and
uplink channels and/or uplink signals received by a spatial filter is associated with a plurality of transmission resources.

27. The method of any of claims 24-26, wherein the transmission resource comprises one or more of: a transmission occasion, and a preamble sequence.

28. The method of any of claims 23-27, wherein receiving, by the first network device, the at least one uplink channel and/or uplink signal transmitted by a terminal device using the one or more spatial filters, comprises one or more of:

receiving, by the first network device, uplink channels and/or uplink signals transmitted by the terminal device using a plurality of spatial filters in one transmission occasion, wherein the uplink channels and/or uplink signals received by the plurality of spatial filters are associated with a plurality of preamble sequences;
receiving, by the first network device, an uplink channel and/or an uplink signal transmitted by the terminal device using one spatial filter in one transmission occasion;
receiving, by the first network device, uplink channels and/or uplink signals transmitted by the terminal device using different spatial filters in a plurality of transmission occasions; and
receiving, by the first network device, uplink channels and/or uplink signals transmitted by the terminal device using the same spatial filter in the plurality of transmission occasions.

29. The method of any one of claims 23-28, wherein transmitting, by the first network device, the first information to the terminal device through the second network device comprises:

transmitting, by the first network device, third information to the second network device, wherein the third information triggers the second network device to transmit the first information to the terminal device, and the third information indicates the first TA value.

30. The method of claim 29, wherein the third information is further used to indicate a first transmission resource corresponding to the first TA value, the first TA value is determined based on a measurement result of an uplink channel and/or an uplink signal associated with the first transmission resource, and the one or more transmission resources comprise the first transmission resource.

31. A communication method, comprising:

receiving, by a second network device, third information transmitted by a first network device, the third information indicating a first timing advance, TA, value of the first network device, wherein the first network device is a network device that does not support downlink transmission, and the second network device is a network device that supports downlink transmission; and
transmitting, by the second network device, first information to a terminal device, wherein the first information indicates the first TA value, and the first TA value is used for the terminal device to perform uplink transmission with the first network device.

32. The method of claim 31, wherein the first network device and the second network device belong to the same timing advance group, TAG, and the first information comprises:

a reference TA value;
a first TA offset associated with the first network device; and
a second TA offset associated with the second network device;
wherein the first TA value of the first network device is determined based on the reference TA value and the first TA offset.

33. The method of claim 31, wherein the first network device and the second network device belong to the same TAG, and the first information comprises:

a second TA value of the second network device; and
a first difference value associated with the first network device;
wherein the first TA value of the first network device is determined based on the second TA value and the first difference value.

**34.** The method of claim 31, wherein the first network device and the second network device belong to the same TAG, and the first information comprises:

a first difference value associated with the first network device; and
a second difference value associated with the second network device;
wherein the first TA value is determined based on the first difference value and a historical TA value of the first network device.

**35.** The method of claim 31, wherein the first network device and the second network device belong to different TAGs, and the first information comprises:

a reference TA value; and
a first TA offset associated with the first network device;
wherein the first TA value is determined based on the reference TA value and the first TA offset, and a downlink reference timing of the first TA value is the same as that of a second TA value of the second network device.

**36.** The method of any one of claims 31-35, wherein the first information and/or the third information is further used to indicate a first transmission resource, and the first TA value is determined based on a measurement result of an uplink channel and/or an uplink signal associated with the first transmission resource.

**37.** The method of any one of claims 31-36, further comprising:
transmitting, by the second network device, second information to the terminal device, wherein the second information is used for triggering the terminal device to transmit at least one uplink channel and/or uplink signal.

**38.** The method of claim 37, wherein the second information is further used for indicating one or more transmission resources, and the one or more transmission resources are associated with the at least one uplink channel and/or uplink signal transmitted by the terminal device to the first network device using one or more spatial filters.

**39.** The method of claim 38, wherein the transmission resource comprises one or more of: a transmission occasion, and a preamble sequence.

**40.** The method of claim 40, wherein the transmission occasion is a transmission occasion associated with a first downlink reference signal, and the first downlink reference signal is any one of a plurality of downlink reference signals transmitted by the second network device.

**41.** The method of any one of claims 37-40, wherein the first information is a physical downlink control channel, PDCCH, order.

**42.** A communication apparatus, applied to a terminal device and comprising:

a first transmitting unit, configured to transmit at least one uplink channel and/or uplink signal to a first network device using one or more spatial filters, wherein the first network device is a network device that does not support downlink transmission, and the at least one uplink channel and/or uplink signal transmitted using the one or more spatial filters is used by the first network device to determine a first timing advance, TA, value of the first network device; and
a first receiving unit, configured to receive first information from a second network device, wherein the first information indicates the first TA value, and the first TA value is used for the terminal device to perform uplink transmission with the first network device.

**43.** A communication apparatus, applied to a first network device and comprising:

a second receiving unit, configured to receive at least one uplink channel and/or uplink signal transmitted by a terminal device using one or more spatial filters, wherein the first network device is a network device that does not support downlink transmission, and the at least one uplink channel and/or uplink signal received using the one or more spatial filters is used to determine a first timing advance, TA, value of the first network device; and
a second transmitting unit, configured to transmit first information to the terminal device through a second network device, wherein the first information indicates the first TA value, the second network device is a network device supporting downlink transmission, and the first TA value is used for the terminal device to perform uplink transmission with the first network device.

**44.** A communication apparatus, applied to a second network device and comprising:

a third receiving unit, configured to receive third information transmitted by a first network device, the third information indicating a first timing advance, TA, value of the first network device, wherein the first network device is a network device that does not support downlink transmission, and the second network device is a network device that supports downlink transmission; and

a third transmitting unit, configured to transmit first information to a terminal device, wherein the first information indicates the first TA value, and the first TA value is used for the terminal device to perform uplink transmission with the first network device.

45. A communication device comprising: a processor and a memory for storing a computer program, wherein the processor is configured to invoke and run the computer program stored in the memory to perform the method of any one of claims 1-22, or perform the method of any one of claims 23-30, or perform the method of any one of claims 31-41.

46. A chip, comprising: a processor, configured to invoke and run a computer program from a memory, to cause a device installed with the chip to perform the method of any one of claims 1-22, or perform the method of any one of claims 23-30, or perform the method of any one of claims 31-41.

47. A computer-readable storage medium, having stored a computer program, wherein the computer program, when executed by at least one processor, implements the method of any one of claims 1-22, or the method of any one of claims 23-30, or the method of any one of claims 31-41.

48. A computer program product, comprising computer program instructions that cause a computer to perform the method of any one of claims 1-22, or the method of any one of claims 23-30, or the method of any one of claims 31-41.

49. A computer program, causing a computer to perform the method of any one of claims 1-22, or the method of any one of claims 23-30, or the method of any one of claims 31-41.

| TAG ID | TA Command | Oct 1 |

**FIG. 1**

| R | R | R | R | TA Command | Oct 1 |
| TA Command | | | | | Oct 2 |

**FIG. 2**

| R | TA Command | Oct 1 |
| TA Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

**FIG. 3**

| Downlink frame i |
| Uplink frame i |

$(N_{TA}+N_{TA,offset})*T_c$

**FIG. 4**

| Terminal device | Second network device | First network device |
|---|---|---|
| S110. At least one uplink channel and/or uplink signal is transmitted to the first network device using one or more spatial filters | | S110. At least one uplink channel and/or uplink signal is transmitted to the first network device using one or more spatial filters, and the at least one uplink channel and/or uplink signal transmitted using the one or more spatial filters is used to determine a first TA value of the first network device |
| S120. First information is transmitted, third information is used to indicate the first TA value, and the first TA value is used for the terminal device to perform uplink transmission with the first network device | | |

**FIG. 5**

| Terminal device | Second network device | First network device |
|---|---|---|
| | S100A. Second information that triggers the terminal device to transmit an uplink channel and/or uplink signal | |
| S110. At least one uplink channel and/or uplink signal is transmitted to the first network device using one or more spatial filters | | S110. At least one uplink channel and/or uplink signal is transmitted to the first network device using one or more spatial filters, and the at least one uplink channel and/or uplink signal transmitted using the one or more spatial filters is used to determine a first TA value of the first network device |
| S120. First information is transmitted, third information is used to indicate the first TA value, and the first TA value is used for the terminal device to perform uplink transmission with the first network device | | |

**FIG. 6A**

EP 4 770 238 A1

| Terminal device | Second network device | First network device |

S100B. It is determined that a TA timer expires, and the TA timer is used to trigger the terminal device to transmit an uplink channel and/or uplink signal

S110. At least one uplink channel and/or uplink signal is transmitted to the first network device using one or more spatial filters

S110. At least one uplink channel and/or uplink signal is transmitted to the first network device using one or more spatial filters, and the at least one uplink channel and/or uplink signal transmitted using the one or more spatial filters is used to determine a first TA value of the first network device

S120. First information is transmitted, third information is used to indicate the first TA value, and the first TA value is used for the terminal device to perform uplink transmission with the first network device

**FIG. 6B**

Downlink frame i transmitted by the second network device

Uplink frame i transmitted to the first network device

First TA value

**FIG. 7**

Regular TRP

UL-only TRP

Backhaul link

UL
transmission

UL transmission and
DL transmission

UE 1

**FIG. 8**

UL-only TRP

Regular TRP

S3. Selected RACH occasion and a
corresponding TA value

S2. UL PRACH
beam sweeping

S4. Indication
information

S1. PDCCH order

Terminal device

**FIG. 9**

UL-only TRP

Regular TRP

S2. Selected RACH occasion and a corresponding TA value

S1. UL PRACH beam sweeping

S3. Indication information

Timer based RACH

Terminal device

**FIG. 10**

Communication apparatus 1100

First transmitting unit 1110

First receiving unit 1120

**FIG. 11**

Communication apparatus 1200

Second receiving unit 1210

Second transmitting unit 1220

**FIG. 12**

Communication apparatus 1300

Third receiving unit 1310

Third transmitting unit 1320

**FIG. 13**

1400

Communication device

Processor 1410

Memory 1420

Transceiver 1430

**FIG. 14**

1500

Chip

Input interface
1530

Processor
1510

Memory
1520

Output interface
1540

**FIG. 15**

1600

Communication system

Terminal device
1610

Network device
1620

**FIG. 16**

## INTERNATIONAL SEARCH REPORT

| International application No. |
| --- |
| **PCT/CN2023/115082** |

| | |
| --- | --- |
| **A.** | **CLASSIFICATION OF SUBJECT MATTER** |
| | H04W 72/1268(2023.01)i |

According to International Patent Classification (IPC) or to both national classification and IPC

| | |
| --- | --- |
| **B.** | **FIELDS SEARCHED** |

Minimum documentation searched (classification system followed by classification symbols)

  IPC: H04W

Documentation searched other than minimum documentation to the extent that such documents are included in the fields searched

Electronic data base consulted during the international search (name of data base and, where practicable, search terms used)

  CNABS; CNTXT; VEN; EPTXT; USTXT; WOTXT; CNKI; 3GPP: 仅支持上行传输, 空间滤波器, 定时提前, UL only, spatial filter, TA

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | CN 111757453 A (HUAWEI TECHNOLOGIES CO., LTD.) 09 October 2020 (2020-10-09) description, paragraphs [0060]-[0175], and figures 1-7 | 1-49 |
| A | CN 114826534 A (ZTE CORP.) 29 July 2022 (2022-07-29) description, paragraphs [0032]-[0343], and figures 1-10 | 1-49 |
| A | CN 108347777 A (ZTE CORP.) 31 July 2018 (2018-07-31) description, paragraphs [0113]-[0310], and figures 1-23 | 1-49 |
| A | CN 110089189 A (QUALCOMM INC.) 02 August 2019 (2019-08-02) entire document | 1-49 |
| A | CN 110391881 A (ZTE CORP.) 29 October 2019 (2019-10-29) entire document | 1-49 |
| A | CN 112291842 A (HUAWEI TECHNOLOGIES CO., LTD.) 29 January 2021 (2021-01-29) entire document | 1-49 |
| A | US 2021352613 A1 (LG ELECTRONICS INC.) 11 November 2021 (2021-11-11) entire document | 1-49 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 December 2023** | **11 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 111757453 | A | 09 October 2020 | None | | | |
| CN | 114826534 | A | 29 July 2022 | None | | | |
| CN | 108347777 | A | 31 July 2018 | WO | 2018137401 | A1 | 02 August 2018 |
| CN | 110089189 | A | 02 August 2019 | EP | 3556168 | A1 | 23 October 2019 |
| | | | | EP | 3556168 | B1 | 20 January 2021 |
| | | | | US | 2018176958 | A1 | 21 June 2018 |
| | | | | US | 10897780 | B2 | 19 January 2021 |
| | | | | TW | 201831024 | A | 16 August 2018 |
| | | | | WO | 2018118491 | A1 | 28 June 2018 |
| CN | 110391881 | A | 29 October 2019 | US | 2021160880 | A1 | 27 May 2021 |
| | | | | WO | 2019201247 | A1 | 24 October 2019 |
| | | | | EP | 3783977 | A1 | 24 February 2021 |
| | | | | EP | 3783977 | A4 | 08 June 2022 |
| CN | 112291842 | A | 29 January 2021 | None | | | |
| US | 2021352613 | A1 | 11 November 2021 | None | | | |

Form PCT/ISA/210 (patent family annex) (July 2022)